Europäisches Patentamt

European Patent Office

Office européen des brevets

(19)

(11) **EP 0 514 326 B1**

(12) **EUROPÄISCHE PATENTSCHRIFT**

(45) Veröffentlichungstag und Bekanntmachung des Hinweises auf die Patenterteilung:
**13.03.1996 Patentblatt 1996/11**

(51) Int. Cl.$^6$: **B01D 53/94**, F01N 3/28

(21) Anmeldenummer: **92810320.9**

(22) Anmeldetag: **30.04.1992**

(54) **Katalysator für die katalytische Behandlung von Abgas**

Catalyst for the catalytic treatment of exhaust gas

Catalyseur pour le traitement catalytique de gaz d'échappement

(84) Benannte Vertragsstaaten:
**AT BE CH DE DK ES FR GB GR IT LI LU NL PT SE**

(30) Priorität: **02.05.1991 CH 1316/91**

(43) Veröffentlichungstag der Anmeldung:
**19.11.1992 Patentblatt 1992/47**

(73) Patentinhaber: **SCAMBIA INDUSTRIAL DEVELOPMENTS AKTIENGESELLSCHAFT FL-9494 Schaan (LI)**

(72) Erfinder: **Steenackers, Pieter Delfina, Dr. B-3030 Heverlee (BE)**

(74) Vertreter: **Eder, Carl E. et al Patentanwaltsbüro EDER AG Lindenhofstrasse 40 CH-4052 Basel (CH)**

(56) Entgegenhaltungen:
**GB-A- 2 062 487      US-A- 3 434 806
US-A- 4 175 107**

## Beschreibung

Die Erfindung betrifft einen Katalysator für die katalytische Behandlung von Abgas. Der Katalysator ist insbesondere vorgesehen, um Abgas von einem Verbrennungsmotor, zum Beispiel von einem Benzin-Verbrennungsmotor, durch eine katalytische Behandlung zu reinigen und/oder zu entgiften, d.h. von Schadstoffen zu befreien, indem diese durch eine chemische Reaktion umgewandelt werden. Der Verbrennungsmotor kann beispielsweise zu einem Automobil oder sonstigen Motorfahrzeug gehören oder für den stationären Betrieb - etwa zum Antreiben eines Notstrom-Generators - dienen.

Aus der Praxis bekannte Katalysatoren für die katalytische Reinigung von Abgas eines Benzin-Verbrennungsmotors eines Automobils haben ein Gehäuse mit einem im Querschnitt etwa kreisförmigen oder elliptischen oder ovalen Mantel und mit zwei Endwänden, die im Zentrum je mit einem zylindrischen Stutzen versehen sind und sich von diesem zum Mantel mehr oder weniger konusförmig erweitern. Der eine Stutzen dient dabei als Einlass und der andere als Auslass. Im Gehäuse ist ein Katalysator-Körper angeordnet, der eine Anzahl zur Längsachse paralleler Durchgänge hat. Der Katalysator-Körper weist häufig einen aus Keramik oder Stahl bestehenden Träger auf, der mit einem katalytisch aktiven, mindestens ein Edelmetall enthaltenden Material überzogen ist.

Beim Betrieb der bekannten Katalysatoren der vorgängig beschriebenen Arten strömt das einen Katalysator zugeführte Abgas nach dem Passieren der Öffnung des zylindrischen Einlasses in einen zwischen diesem und dem Katalysator-Körper vorhandenen Hohlraum, der durch die sich mehr oder weniger konisch erweiternde Endwand und eventuell noch durch einen kurzen Abschnitt des einen kreisförmigen oder elliptischen oder ovalen Zylinder bildenden Mantels begrenzt ist. Das Abgas bildet in diesem Hohlraum näherungsweise einen Strahl, der gegen die dem Einlass zugewandte Stirnseite des Katalysator-Körpers gerichtet ist. Eine derartige Einleitung des Abgases in den Katalysator verursacht starke Turbulenzen und einen grossen Druckverlust.

Ferner bewirkt der genannte Strahl, dass die Strömungsgeschwindigkeiten sowie die Durchflussraten im Katalysatorkörper Einhomogen werden und in dessen zentralem, mit der Einlassöffnung fluchtendem Querschnittsbereich wesentlich grösser als im peripheren Querschnittsbereich sind. Da der Strömungsweg in den Katalysator-Körpern der bekannten Katalysatoren relativ lang ist und zudem ein relativ grosser Teil des Abgases mit grosser Geschwindigkeit durch den zentralen Querschnittsbereich der Katalysator-Körper strömt, verursachen diese bei den bekannten Katalysatoren ebenfalls einen grossen Druckverlust. Der bei den bekannten Katalysatoren zwischen dem Einlass sowie dem Katalysator-Körper und im letzteren entstehende, relativ grosse Druckverlust bewirkt seinerseits einen relativ grossen Leistungsverlust des Verbrennungsmotors. Bei Katalysator-Körpern mit einem etwa dem Hubvolumen des Motors entsprechenden Volumen kann der insgesamt vom Katalysator verursachte Druckverlust zum Beispiel in der Grösse von 10 kPa liegen, wodurch bei einem Verbrennungsmotor eines Automobils der mittleren Leistungsklasse zum Beispiel etwa ein Leistungsverlust von 2 kW bis 3 kW resultieren kann.

Die beschriebene Inhomogenität der Durchflussrate im Katalysator-Körper ergibt auch noch den Nachteil, dass der Katalysator-Körper im zentralen Querschnittsbereich viel stärker beansprucht wird als im peripheren Querschnittsbereich. Um trotz der inhomogenen Verteilung der Strömung über die Querschnittsfläche eine ausreichende Reinigung des Abgases zu erzielen, muss der Katalysator-Körper grösser bemessen werden, als es bei homogener Strömungsverteilung nötig wäre. Dadurch wird der Katalysator - insbesondere wegen des hohen Preises des die katalytisch aktive Schicht bildenden Edelmetalls - stark verteuert.

Aus der GB-A-2 062 487 sind nun bereits Katalysatoren bekannt, bei denen das Abgas zwischen der Mündung des Einlasses und der Abgas-Eintrittsfläche des Katalysator-Körpers umgelenkt wird. Das Gehäuse dieser Katalysatoren besitzt einen zylindrischen Mantel und an dessen Enden anschliessende, sich von diesem weg verjüngende, konische Endwände. Der Einlass und der Auslass des Gehäuses bestehen je aus einem zylindrischen, zur Achse des Gehäuses koaxialen Rohr. Im Gehäuse ist ein hohlzylindrischer, gasdurchlässiger Katalysator-Körper angeordnet, dessen Innendurchmesser ungefähr gleich dem Aussendurchmesser der Rohre ist. Bei einigen dieser Katalysatoren ragt das den Einlass bildende Rohr in den vom ringförmigen Katalysator-körper umschlossenen Hohlraum hinein, ist im Bereich dieses Hohlraums mit Löchern versehen und ungefähr bei der dem Auslass zugewandten Stirn- oder Endfläche des Katalysator-Körpers durch eine Abschlusswand abgeschlossen. Das beim Betrieb dieser Katalysatoren durch den Einlass in diese einströmende Abgas wird durch die Abschlusswand gestaut sowie umgelenkt und strömt dann bei der Innenfläche des Katalysator-Körpers in diesen hinein. Eine derartige Stauung und Umlenkung des Abgases verursacht jedoch Turbulenzen und einen starken Druckverlust. Zudem entsteht in dem vom Katalysator-Körper umschlossenen Hohlraum ein starkes axiales Druckgefälle, das seinerseits eine ungleichmässige Verteilung des Abgases im Katalysator-Körper verursachen kann. Wie schon erwähnt, kann eine ungleichmässige Verteilung des den Katalysator-Körper durchströmenden Abgases die im Katalysator-Körper entstehenden Druckverluste erhöhen.

Bei dem in der letzten Figur der GB-A-2 062 487 ersichtlichen Katalysator mündet das den Einlass bildende Rohr beim dünneren Ende von einer der konischen Endwände in den Innenraum des Gehäuses. Zwischen dem zylindrischen Mantel des Gehäuses und der äusseren Mantelfläche des ringförmigen Katalysator-Körpers ist ein äusserer, ringförmiger Hohlraum vorhanden. Im Gehäuse-Innenraum ist auf der dem Einlass zugewandten Stirnseite des Katalysator-Körpers ein Leitelement angeordnet. Dieses besitzt eine gegen die Mündung des Einlasses ragende Spitze und bildet eine konische Leitfläche, die 45° gegen die Gehäuse-Achse geneigt ist. Das Leitelement lenkt das bei der Benutzung des Katalysators durch den Einlass in den Gehäuse-Innenraum strömende Abgas nach aussen in den äusseren Hohlraum. Das mit relativ grosser Geschwindigkeit aus dem Einlass in den Innenraum des Gehäuses einströmende Abgas kann sich jedoch bei der den Mündungsrand des Einlasses bildenden Kante von der Wandung des Gehäuses ablösen, so dass die Strömung dort zur Bildung von Turbulenzen neigt, die einen grossen Druckverlust verursachen können. Die Bildung von Turbulenzen und der Druckverlust werden zudem durch die Spitze des Leitelements verstärkt. Wie schon erläutert, verursachen die im Katalysator entstehenden Druckverluste oder Druckabfälle Leistungsverluste des Verbrennungsmotors, der an den Katalysator angeschlossen ist. Zudem ergibt sich auch beim Betrieb dieses Katalysators eine inhomogene Strömungsverteilung im Katalysator-Körper.

Da die konischen Endwände der Gehäuse der aus der GB-A-2 062 487 bekannten Katalysatoren mit der Achse des betreffenden Gehäuses einen nur 35° bis 40° betragenden Winkel bilden, sind die Gehäuse im Vergleich zu den axialen Abmessungen der Katalysator-Körper relativ lang. Dies kann insbesondere bei Katalysatoren für den Einbau in Auspuffanlagen von Automobilen oder anderen Motorfahrzeugen nachteilig sein, weil dort häufig wenig Platz verfügbar ist.

Der Erfindung liegt daher die Aufgabe zugrunde, einen Katalysator bereitzustellen, der bei einer bestimmten, vorgegebenen, pro Zeiteinheit zu behandelnden Abgasmenge nur einen kleinen Druckverlust verursacht und eine homogene Strömungsverteilung im Katalysator-Körper ergibt, wobei der letztere mit einem kleinen Volumen sowie kostengünstig herstellbar sein soll und wobei aus dem Einlass in den Gehäuse-Innenraum strömendes Abgas vorzugsweise in einem Hohlraum mit relativ kleiner axialer Abmessung umlenkbar sein soll.

Diese Aufgabe wird durch einen Katalysator gelöst, der erfindungsgemäss die Merkmale des Anspruchs 1 aufweist. Vorteilhafte Ausgestaltungen des Erfindungsgegenstands gehen aus den abhängigen Ansprüchen hervor.

Gemäss der Erfindung besitzt die Innenfläche des Einlasses also einen Übergangsflächenabschnitt, der auch als Mündungsflächenabschnitt bezeichnet werden kann und sich in einem durch die Achse des Einlasses verlaufenden Schnitt zum Rand der Mündung hin bogenförmig erweitert. Der Übergangsflächenabschnitt erweitert sich damit auch in der Strömungsrichtung sowie entlang dem Strömungsweg zum Innenraum hin bogenförmig.

Dabei ist der Rand der Mündung des Einlasses durch das weitere Ende des sich erweiternden Übergangsflächenabschnitts begrenzt bzw. dem weiteren Ende des Übergangsflächenabschnitts zugeordnet, so dass sich der letztere - mit anderen Worten gesagt - genau bis zum Einlass-Mündungsrand erstreckt. Im übrigen soll sich der Übergangsflächenabschnitt vorzugsweise in jedem durch die Achse des Einlasses verlaufenden Schnitt bogenförmig erweitern. Der Übergangflächenabschnitt und der sich stromaufwärts an diesen anschliessende Innenflächenabschnitt des Einlasses sind vorzugsweise rotationssymetrisch zur Achse des Einlasses.

Das bei der Benutzung des Katalysators aus der vom Einlass begrenzten Öffnung in den Innenraum des Gehäuses strömende Abgas kann daher durch die der Mündung des Einlasses gegenüberstehende Leitfläche umgelenkt werden, ohne sich vom übergangsflächenabschnitt abzulösen. Dadurch kann auch die Bildung von Turbulenzen weitgehend oder vollständig vermieden werden.

Bei einer vorteilhaften Ausgestaltung des erfindungsgemässen Katalysators hat die Innenfläche des Einlasses einen kreiszylindrischen oder sich in der Strömungsrichtung leicht konisch erweiternden Innenflächenabschnitt, der durch den übergangsflächenabschnitt stetig mit einer der Leitfläche in Abstand gegenüberstehenden Gegenfläche verbunden ist. Die Leit- und die Gegenfläche sind bei der besonders vorteilhaften Ausführungsform des erfindungsgemässen Katalysators im wesentlichen eben und rechtwinklig zur Achse des Einlasses.

Die Leitfläche oder mindestens deren sich in axialer Projektion ausserhalb des Einlass-Mündungsrandes befindender Abschnitt und der diesem gegenüberstehende Abschnitt der Gegenfläche können jedoch mit der Achse des Einlasses auch von 90° verschiedene Winkel bilden. Diese Winkel betragen dann mindestens 60° und beispielsweise mindestens 70° bis beispielsweise etwa 85°. Ferner sind die beiden von den genannten Abschnitten der Leitfläche und der Gegenfläche mit der Einlass-Achse gebildeten Winkel vorzugsweise gleich gross, so dass die sich gegenüberstehenden Abschnitte der Leitfläche und der Gegenfläche in den durch die Einlass-Achse verlaufenden Schnitten parallel zueinander sind.

Hier soll noch ein Begriff erläutert werden. Wie schon beschrieben, entstehen im Katalysator Druckverluste bzw. Druckabfälle oder - mit andern Worten - zu überwindende Gegendrücke. Es ist bekannt, einen in einer Strömung entstehenden Druckverlust durch eine dimensionslose Verhältniszahl, den sogenannten Druckverlust-Koeffizienten auszudrücken. Dieser wird nachfolgend mit Z bezeichnet und soll gleich dem Verhältnis zwischen dem betrachteten Druckverlust und dem Staudruck des durch den Einlass des Katalysators strömenden Abgases sein. Der Staudruck ist dabei gegeben durch den Ausdruck $\text{rho} \cdot v^2/2$, wobei rho die Dichte und v die Geschwindigkeit des den Einlass durchströmenden Abgases bezeichnet.

Wie es bei der Beschreibung der Ausführungsbeispiele noch durch ein Diagramm erläutert wird, kann erreicht werden, dass der ein Mass für den beim Umlenken des Abgases entstehende Druckverlust gebende Druckverlust-Koeffizient Z bei geeigneter Bemessung des Krümmungsradius des Übergangsflächenabschnitts und des Abstandes der Leitfläche vom Einlass-Mündungsrand und von der Gegenfläche kleiner als 1 und vorzugsweise kleiner als 0,6 oder sogar kleiner als 0,5 wird.

Der Erfindungsgegenstand wird nachfolgend anhand in der Zeichnung dargestellter Ausführungsbeispiele erläutert. In der Zeichnung zeigt

die Figur 1 einen vereinfachten Axialschnitt durch einen Katalysator mit einem Gehäuse und einem in diesem angeordneten, aus einem hohlzylindrischen Ring bestehenden Katalysator-Körper,

die Figur 2 einen Schnitt entlang der Linie II - II der Figur 1 durch den in dieser ersichtlichen Katalysator,

die Figur 3 einen Ausschnitt aus dem gleich wie in der Figur 1 geschnittenen Katalysator-Körper, aber in grösserem Massstab,

die Figur 4 ein Diagramm zur Veranschaulichung des Druckverlusts in Abhängigkeit von verschiedenen Abmessungsverhältnissen,

die Figuren 5 bis 7 Schnitte durch andere Katalysatoren,

die Figur 8 eine Draufsicht auf den in der Figur 7 ersichtlichen Katalysator,

die Figuren 9 sowie 10 Schnitte durch weitere Katalysatoren,

die Figur 11 eine Draufsicht auf den Katalysator gemäss der Figur 10,

die Figuren 12, 13, 14 Axialschnitte durch andere Katalysatoren,

die Figur 15 einen Querschnitt durch den in der Figur 14 gezeichneten Katalysator entlang der Linie XV-XV der Figur 14, und

die Figuren 16 bis 19 Axialschnitte durch noch andere Katalysatoren.

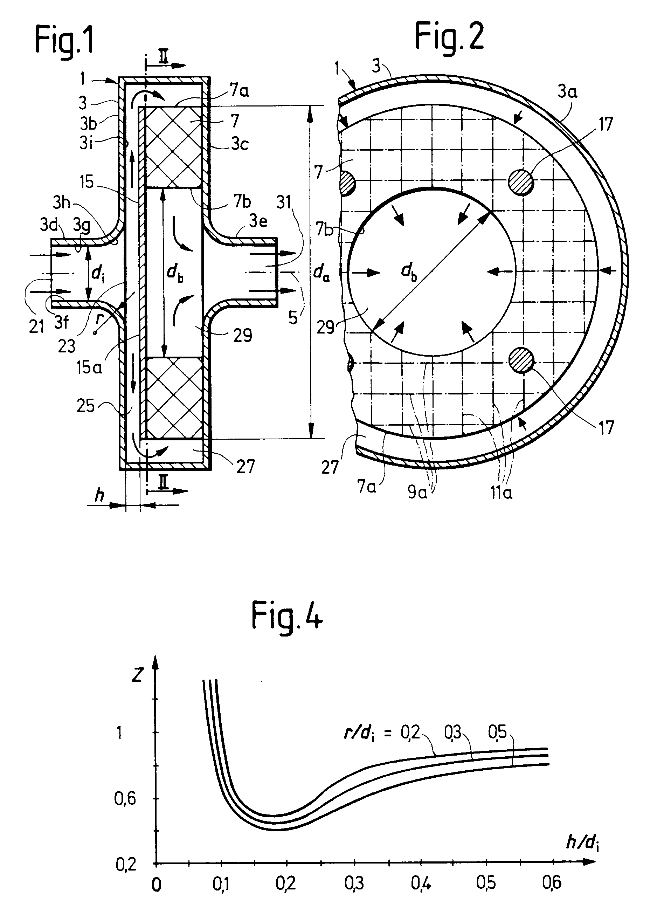

Der in der Figur 1 und zum Teil in der Figur 2 ersichtliche Katalysator 1 weist ein Gehäuse 3 mit einer metallischen, beispielsweise aus rostfreiem Stahl bestehende Wandung auf, die einen Innenraum begrenzt und gasdicht gegen die Umgebung abschliesst. Die Wandung des Gehäuses 3 ist im allgemeinen rotationssymmetrisch zu einer Achse 5 und besitzt einen im allgemeinen kreiszylindrischen, zur Achse 5 parallelen sowie koaxialen Mantel 3a und bei dessen beiden Enden je eine mit der Achse 5 einen Winkel - nämlich einen rechten Winkel - bildende und also radiale Endwand 3b, 3c. Jede Endwand 3b, 3c ist im Zentrum mit einem von ihr wegragenden, zur Achse 5 koaxialen Anschluss-Stutzen versehen, der als Einlass 3d bzw. als Auslass 3e dient. Der Einlass 3d hat eine Innenfläche 3f mit einem kreiszylindrischen Innenflächenabschnitt 3g. Dieser ist durch einen im Axialschnitt von der Achse 5 weg gebogenen Übergangsflächenabschnitt 3h stetig mit der zur Achse 5 radialen sowie rechtwinkligen, ebenen sowie glatten Innenfläche der Endwand 3b verbunden. Diese Innenfläche wird im folgenden als Gegenfläche 3i bezeichnet. Die Innenfläche des Auslasses 3e ist gleich oder ähnlich wie diejenige des Einlasses 3d ausgebildet. Übrigens besteht das in der Figur 1 schematisch als einstückiger Körper gezeichnete Gehäuse in Wirklichkeit aus mindestens zwei dicht miteinander verbundenen, nämlich verschweissten Teilen.

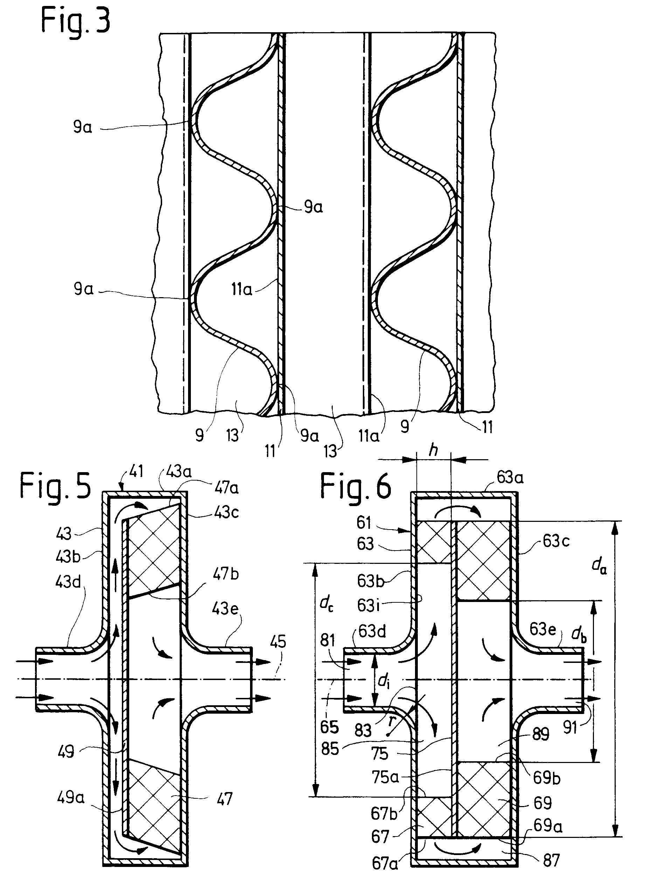

Im Gehäuse 3 ist ein Kern angeordnet und befestigt, der einen ringförmigen oder hülsenförmigen, gasdurchlässigen Katalysator-Körper 7 aufweist. Ein solcher wird in der Fachsprache häufig als Substrat bezeichnet. Der Katalysator-Körper hat aussen eine äussere, kreiszylindrische Mantelfläche 7a, innen eine innere, kreiszylindrische Mantelfläche 7b sowie auf beiden Stirnseiten eine im allgemeinen ebene, radiale Stirnfläche. Die beiden Mantelflächen 7a, 7b werden im folgenden auch als Abgas-Eintrittsfläche 7a bzw. Abgas-Austrittsfläche 7b bezeichnet. Der Katalysator-Körper 7 weist eine Anzahl von zum Teil in der Figur 3 ersichtlichen, kreisringförmigen, koaxial zueinander angeordneten Scheiben 9 und 11 auf, wobei abwechselnd eine Scheibe 9 auf eine Scheibe 11 folgt. Jede Scheibe ist im Profil und/oder Querschnitt wellenförmig und bildet eine Anzahl von parallel zueinander verlaufenden Wellen. Wenn man in Gedanken eine zur Achse des Körpers rechtwinklige radiale Mittelebene durch eine bestimmte Scheibe legt, können die auf einander abgewandter Seiten dieser Mittelebene wegragenden Halbwellen als Erhöhungen der Scheibe aufgefasst werden. In den Figuren 2 und 3 sind die Scheitellinien der Halbwellen der Scheibe 9 mit 9a und die Scheitellinien der Halbwellen der Scheibe 11 mit 11a bezeichnet. Es sei hierbei angemerkt, dass in Wirklichkeit wesentlich mehr Halbwellen-Scheitellinien vorhanden sind, als der in Figur 2 gezeichnet wurden. Die Wellen der verschiedenen Scheiben 9 verlaufen alle parallel zueinander. Die Wellen der verschiedenen Scheiben 11 verlaufen ebenfalls alle parallel zueinander und kreuzen in der zur Achse 5 parallelen Draufsicht die Wellen der Scheiben 9 rechtwinklig. Jeweils zwei einander benachbarte Scheiben 9, 11 berühren sich bei den Kreuzungsstellen ihrer gegeneinander ragenden Wellenscheitel und also bei einer Vielzahl von regelmässig über ihre Oberflächen verteilten, annähernd punktartigen Berührungsstellen. In den übrigen, nicht von diesen punktähnlichen Berührungsstellen eingenommenen Oberflächenbereichen ist zwischen den zwei einander benachbarten Scheiben ein freier Zwischenraum vorhanden, der einen Durchgang 13 des Katalysator-Körpers 7 bildet. Die Durchgänge 13 verlaufen im allgemeinen entlang von zur Achse 5 rechtwinkligen, radialen Ebenen und ermöglichen ein Durchströmen des zu behandelnden Abgases von der äusseren Mantelfläche und/oder Abgas-Eintrittsfläche 7a in mehr oder weniger radialen Richtungen zur inneren Mantelfläche und/oder Abgas-Austrittsfläche 7b. Der Katalysator-Körper 7 ist also - wie schon angegeben - gasdurchlässig, und zwar in im allgemeinen radialen Richtungen. Es sei noch angemerkt, dass das den Körper 7 beim Betrieb durchströmende Abgas teilweise sowie stellenweise mehr oder weniger den wellenförmigen Oberflächen der Scheiben 9, 11 folgt und selbstverständlich auch um die Berührungsstellen herumströmt, bei denen die Scheiben einander paarweise berühren, so dass die Strömungsrichtung des Abgases im Körper 7 eben nur im allgemeinen und nicht genau radial ist.

Jede Scheibe 9, 11 weist einen Träger auf, der durch ein zum Beispiel aus rostfreiem Stahl bestehendes Wellblech gebildet ist. Auf diesem Träger ist beidseitig ein zur Vergrösserung der Oberfläche dienender Überzug aus Aluminiumoxid aufgebracht, der seinerseits mit einer Schicht von katalytisch aktiven Material überzogen ist, das mindestens ein Edelmetall, beispielsweise Platin und/oder Rhodium aufweist.

Die Dicke des den Träger bildenden Wellblechs kann beispielsweise etwa 0,04 bis 0,05 mm betragen. Die auf die beiden Seiten des Trägers aufgebrachten Aluminiumoxidschichten sind beispielsweise dünner oder haben höchstens ähnliche Dicken wie der Träger. Die aus dem katalytisch aktiven Material bestehenden Überzüge sind dünner als der Träger und auch dünner als die Aluminiumoxidschichten. Die von Wellenberg zu Wellenberg gemessene Wellenhöhe einer Scheibe kann beispielsweise etwa 1 mm bis 1,5 mm betragen.

Die den Katalysator-Körper auf seinen beiden Stirnseiten begrenzenden Scheiben können beispielsweise eben und dicker als die Scheiben 9, 11 oder eventuell ebenfalls wellenförmig sein. Im übrigen können die bei den Stirnseiten des Körpers angeordneten Scheiben wahlweise nur auf ihren innern Seiten oder beidseitig oder auf keiner Seite mit Überzügen aus Aluminiumoxid und Edelmetall versehen sein.

Die Bildung des Katalysator-Körpers 7 aus wellenförmigen Scheiben 9, 11 ermöglicht mit relativ kleinen Scheibendicken eine ausreichende Festigkeit und hohe Stabilität zu erreichen. Dies wiederum ermöglicht, das das gesamte Volumen der Durchgänge im Verhältnis zum Volumen des ganzen Körpers relativ gross ist und beispielsweise mindestens 60 oder sogar mindestens 70% und bis etwa 90% vom Volumen des ganzen Körpers beträgt. Ferner ergibt die wellenförmige Profilierung der Scheiben bei den Begrenzungen der Durchgänge grosse Oberflächen.

Der Katalysator-Körper 7 liegt bei seiner sich in der Figur 1 rechts befindenden Stirnseite fest und - falls er bei dieser Stirnseite nicht ebenfalls noch eine wellenförmige Oberfläche hat - auch mindestens einigermassen oder vollkommen dicht an der Endwand 3c an. An seiner sich in der Figur 1 links befindenden Stirnseite ist ein aus einer ebenen, kreisförmigen, beispielsweise metallischen Scheibe bestehendes Abschluss-Leitelement 15 befestigt, dessen Durchmesser gleich dem Aussendurchmesser des Katalysator-Körpers 7 ist. Die der Endwand 3b des Gehäuses 3 zugewandte Seite des Leitelements 15 bildet eine von dieser in Abstand stehende, ebene, glatte, zur Achse 5 rechtwinklige und also radiale Leitfläche 15a.

Die verschiedenen Scheiben 9, 11 des Katalysator-Körpers 7 sind vorzugsweise in irgend einer Weise fest miteinander verbunden, zum Beispiel bei den Berührungsstellen oder bei mindestens einem Teil von diesen miteinander versintert und/oder verschweisst oder verlötet. Das Leitelement 15 kann ebenfalls mit der ihm benachbarten Scheibe des Körpers 7 verschweisst oder verlötet sein. Zur Befestigung des aus dem Katalysatorkörper 7 und dem Leitelement 15 gebildeten Kerns an der Wandung des Gehäuses 3 können zum Beispiel einige nur in der Figur 2 gezeichnete, aus Bolzen bestehende Befestigungselemente 17 vorhanden sein, die um die Achse 5 herum verteilt sind und parallel zu dieser durch den Katalysator-Körper 7 hindurch verlaufen. Die Befestigungselemente 17 können zum Beispiel am Leitelement 15 festgeschweisst und an der Endwand 3c ebenfalls festgeschweisst oder mit Hilfe von auf ihre Enden aufgeschraubten Gewindemuttern lösbar befestigt sein. Die Befestigungselemente können zudem eventuell bis zur Endwand 3b ragen und an dieser ebenfalls unlösbar oder lösbar befestigt sein. Die sich am nächsten bei der Endwand 3c befindenden Scheibe des Katalysator-Körpers 7 kann zudem eventuell an der Endwand 3c angeschweisst oder angelötet sein. Das Leitelement 15 ist abgesehen von allenfalls vorhandenen und von den Befestigungselementen 17 durchdrungenen Löchern kompakt, d.h. lochfrei.

Der Einlass 3d begrenzt eine Einlassöffnung 21. Diese hat eine in den Innenraum des Gehäuses mündende Mündung mit einer ebenen Mündungsfläche 23, die in der von der Gegenfläche 3i aufgespannten Ebene liegt und von der Gegenfläche 3i umschlossen ist. Der auf einer Seite durch die Leitfläche 15a und auf der dieser gegenüberstehenden Seite durch die zur Leitfläche parallele Gegenfläche 3i und die Mündungsfläche 23 begrenzte Bereich des Gehäuse-Innenraums wird im folgenden als Umlenk-Hohlraum 25 bezeichnet. Dieser verbindet die Einlassöffnung 21 mit dem zwischen der Innenfläche des Mantels 3a und der äussern Mantelfläche 7a des Katalysator-Körpers sowie dem Rand des Leitelements 15 vorhandenen, ringförmigen, äussern Hohlraum 27. Im Innern des Körpers 7 ist ein innerer, freier Hohlraum 29 vorhanden, dessen eines Ende durch das Leitelement 15 dicht gegen den restlichen Innenraum des Gehäuses 3 und insbesondere gegen den Umlenk-Hohlraum 25 abgeschlossen ist. Der innere Hohlraum 29 hängt mit der im Auslass 3e vorhandenen Auslassöffnung 31 zusammen.

Die lichte Weite des Einlasses 3d ist gleich dem Durchmesser des kreiszylindrischen Innenflächenabschnitts 3g und des in der Abgas-Strömungsrichtung stetig an diesen anschliessenden, engeren Endes des Übergangsflächenabschnitts 3h. Dieser Durchmesser wird im folgenden als Innendurchmesser $d_i$ des Einlasses bezeichnet. Ferner wird unter der Querschnittsfläche der Einlassöffnung im folgenden die Querschnittsfläche beim kreiszylindrischen Innenflächenabschnitt des Einlasses verstanden. Der Übergangsflächenabschnitt 3h hat im in der Figur 1 gezeichneten Axialschnitt den Krümmungsradius r. Die Leitfläche 15a hat von der ihr gegenüberstehenden Gegenfläche 3i, von der Mündungsfläche 23 und also insbesondere auch beim die Gegenfläche von der Mündungsfläche abgrenzenden Mündungsrand oder - genauer gesagt - Mündungsflächenrand den Abstand h. Der Aussendurchmesser des Katalysator-Körpers 7 und der gleich grosse Durchmesser des Leitelements 15 ist mit $d_a$ bezeichnet. Der Innendurchmesser des Körpers 7, d.h. der Durchmesser des innern Hohlraums 29 ist mit $d_b$ bezeichnet.

Wie bereits erwähnt, können die Befestigungselemente 17 möglicherweise bis zur Endwand 3b ragen und dementsprechend den Umlenk-Hohlraum 25 durchdringen. Falls dies zutrifft, ist der Umlenk-Hohlraum zwar nicht ganz, aber doch im wesentlichen frei. Wenn hingegen die Befestigungselemente 17 nur von der Endwand 3c bis zum Leitelement 15 reichen, kann der Hohlraum 25 vollständig frei sein. Der äussere Hohlraum 27 kann den Körper 7 unterbruchslos und vollständig umschliessen und vollständig frei sein. Es sei jedoch angemerkt, dass der Körper 7 bei seiner äussern Mantelfläche 7a durch nicht gezeichnete Haltemittel - zum Beispiel durch radial nach aussen ragende Vorsprünge und/oder Rippen - am Mantel 3a des Gehäuses 3 gehalten, etwa abgestützt und/oder starr befestigt sein kann. Wenn derartige Haltemittel vorgesehen werden, ist dann der äussere Hohlraum 27 ebenfalls nur noch teilweise frei und wird unter Umständen durch die Haltemittel sogar in Teilräume unterteilt, die aber alle durch den Umlenk-Hohlraum 25 mit der Einlassöffnung 21 verbunden sein sollen. Es sei ferner angemerkt, dass die metallische Wandung des Gehäuses innen und/oder aussen mit einer nicht gezeichneten Wärmeisolation versehen sein kann.

Der Katalysator 1 kann für seine Verwendung in eine Auspuffanlage eines Benzin-Verbrennungsmotors eines Automobils eingebaut werden. Der Einlass 3d und der mit diesem fluchtende Auslass 3e können dabei mit Leitungen verbunden werden, die ungefähr die gleichen lichten Weiten wie die Einlass- und die Auslassöffnung haben. Das Abgas strömt beim Betrieb des Motors und des Katalysators 1 dann in der in den Figuren 1 und 2 durch Pfeile veranschaulichten Weise durch den Katalysator 1. Das Abgas strömt nämlich ungefähr parallel zur Achse 5 durch die Einlassöffnung 21 und wird dann durch die Leitfläche 15a umgelenkt, so dass es in mehr oder weniger radialen Richtungen von der Achse 5 weg durch den Umlenk-Hohlraum 25 nach aussen bis zu einem beim Rand des Leitelements 15 vorhandenen Randbereich des Umlenk-Hohlraums 25 strömt. Das Abgas wird dort wieder in eine im allgemeinen axiale Richtung umgelenkt, so dass es in den äussern Hohlraum 27 strömt. Von diesem gelangt es bei der äussern Mantelfläche und/oder Abgas-Eintrittsfläche 7a in den Katalysator-Körper 7, wobei es auf die verschiedenen Durchgänge 13 von diesem verteilt wird. Die beiden Hohlräume 25 und 27 bilden also zusammen eine Diffusor-Kammer für das Abgas. Das auf die verschiedenen Durchgänge 13 verteilte Abgas strömt nun durch diese in im allgemeinen radialen Richtungen nach innen, wobei es durch eine katalytische Behandlung gereinigt und/oder entgiftet wird. Bei der katalytischen Behandlung werden zum Beispiel in bekannter Weise Kohlenmonoxid sowie Kohlenwasserstoffe oxidiert, nämlich verbrannt, und Stickoxide reduziert, nämlich in Stickstoff und Sauerstoff umgewandelt. Das aus den verschiedenen Durchgängen 13 in den innern, als Sammel-Kammer dienenden Hohlraum 29 strömende Abgas wird in diesem gesammelt, in axiale Richtung umgelenkt und zur Auslass-öffnung 31 geleitet, durch die es den Katalysator 1 verlässt.

Nach dieser allgemeinen Beschreibung des Strömungswegs des Abgases sollen nun einige Einzelheiten näher erörtert werden. Wenn das Abgas aus dem Einlass in den eigentlichen Innenraum des Gehäuses 3 strömt, dabei durch die Leitfläche 15a umgelenkt wird und den Umlenk-Hohlraum 25 passiert, entsteht ein Druckverlust. Dieser ist vom Verhältnis $h/d_i$ und auch vom Verhältnis $r/d_i$ abhängig. Im in der Figur 4 ersichtlichen Diagramm ist auf der Abszisse das Verhältnis $h/d_i$ und auf der Ordinate der in Einleitung definierte Druckverlust-Koeffizient Z für den bei der Abgas-Umlenkung im Umlenk-Hohlraum entstehenden Druckverlust aufgetragen. Das Diagramm enthält drei Kurven, die den Verhältnissen $r/d_i$ gleich 0,2 bzw. 0,3 bzw. 0,5 zugeordnet sind. Gemäss dem Diagramm ist der Koeffizient Z bei kleinen, weniger als etwa 0,1 betragenden Werten des Verhältnisses $h/d_i$ grösser als 1 und der Druckverlust dementsprechend grösser als der Staudruck des durch den Einlass strömenden Abgases. Bei wachsendem Verhältnis $h/d_i$ fällt der Druckverlust-Koeffizient Z dann zunächst steil ab, hat bei zwischen 0,15 und 0,2 liegenden Werten des Verhältnisses $h/d_i$ ein Minimum und steigt danach langsam wieder an. Gemäss den drei Kurven des Diagramm ergibt eine Vergrösserung des Verhältnisses $r/d_i$ von 0,2 auf 0,5 eine Reduktion des Druckabfall-Koeffizients, wobei der minimale Wert von Z abhängig von $r/d_i$ ungefähr 0,4 bis 0,5 beträgt.

Der Abstand h ist daher vorzugsweise mindestens 10% und besser beispielsweise mindestens 15% des Innendurchmessers $d_i$. Der Abstand h beträgt ferner vorzugsweise höchstens 25% von $d_i$, kann aber nötigenfalls - wie noch erläutert wird - auch grösser sein und zum Beispiel bis höchstens 50% oder höchstens 70% oder sogar bis höchstens 100% von $d_i$ betragen. Der Krümmungsradius r kann mindestens 10% oder mindestens 20% und - falls es platzmässig möglich ist - noch besser bis ungefähr 50% des Innendurchmessers $d_i$ betragen oder vielleicht sogar noch grösser und bis beispielsweise

100% von $d_i$ gemacht werden. Bei einer derartigen Bemessung von h und r ergibt sich gemäss dem Diagramm ein Druckverlust-Koeffizient Z, der höchstens ungefähr 1 oder sogar nur ungefähr 0,4 bis 0,5 beträgt.

Der Durchmesser des Leitelements 15 und der mit diesem Durchmesser identische Aussendurchmesser $d_a$ des Katalysator-Körpers 7 soll grösser sein als die Summe $d_i + 2r$ und ist vorzugsweise mindestens dreimal oder mindestens viermal und beispielsweise sogar mindestens oder ungefähr fünfmal grösser als der Innendurchmesser $d_i$. Der Rand der Leitfläche 15a hat also von der Achse 5 einen Abstand, der vorzugsweise mindestens das 1,5-fache oder mindestens das 2-fache oder sogar mindestens oder ungefähr das 2,5-fache von $d_i$ beträgt. Der Innendurchmesser des Mantels 3a ist vorzugsweise soviel grösser als der Aussendurchmesser $d_a$ des Katalysator-Körpers 7, dass die Querschnittsfläche des äussern Hohlraums 27 in einen zur Achse 5 rechtwinkligen Querschnitt mindestens dreimal, noch besser mindestens fünfmal oder sogar mindestens oder ungefähr zehnmal grösser als die Querschnittsfläche der Einlassöffnung ist. Die Strömungsgeschwindigkeit des Abgases im äusseren Hohlraum 27 ist dann wesentlich kleiner als die Strömungsgeschwindigkeit in der Einlassöffnung 21 und in dem normalerweise mit dem Einlass 3d verbundenen Leitungsstück. Dies gewährleistet, dass der im äussern Hohlraum 27 entstehende Druckverlust den im Umlenk-Hohlraum 25 entstandenen Druckverlust nur geringfügig vergrössert, dass der Druck im ganzen äusseren Hohlraum 27 praktisch konstant ist und dass das Abgas gleichmässig auf alle Durchgänge 13 des Katalysator-Körpers 7 verteilt wird.

Der Innendurchmesser $d_b$ des Katalysator-Körpers 7 ist grösser als der Innendurchmesser $d_i$ des Einlasses, vorzugsweise mindestens gleich der Summe $d_i + 2r$ und beispielsweise mindestens 50% und noch besser 100% grösser als $d_i$. Da das Abgas den Katalysator-Körper 7 zumindest im allgemeinen in radialen Richtungen durchströmt, variiert die Grösse der zur Strömungsrichtung rechtwinkligen Querschnittsfläche des Körpers 7 entlang dem Strömungsweg zwischen der Grösse der äussern Mantelflächen und/oder Abgas-Eintrittsfläche 7a und der Grösse der innern Mantelfläche und/oder Abgas-Austrittsfläche 7b des Körpers 7. Die Grössen der beiden Mantelflächen 7a, 7b sind durch die Durchmesser $d_a$ bzw. $d_b$ und die axiale Abmessung des Körpers 7 bestimmt. Die äussere Mantelfläche des Körpers 7 ist vorzugsweise mindestens fünfmal und beispielsweise mindestens zehnmal oder sogar mindestens zwanzigmal grösser als die Querschnittsfläche der Einlassöffnung 21 und als die Querschnittsfläche der Auslassöffnung 31. Die innere Mantelfläche des Körpers 7 ist vorzugsweise mindestens dreimal, noch besser mindestens fünfmal oder sogar mindestens zehnmal grösser als die Querschnittsfläche der Einlassöffnung 21 und der Auslassöffnung 31.

Wenn zum Beispiel der Körper 7 in bezug auf den Innendurchmesser $d_i$ etwa die in den Figuren 1 und 2 gezeichneten Abmessungen hat und nämlich der Aussendurchmesser $d_a$ des Körpers 7 ungefähr das 6-fache sowie der Innendurchmesser $d_b$ des Körpers 7 ungefähr das 3-fache des Innendurchmessers $d_i$ beträgt und zudem die axiale Abmessung des Körpers 7 ungefähr gleich dem Innendurchmesser $d_i$ ist, wird die äussere Mantelfläche des Körpers 7 ungefähr 24 Mal und die innere Mantelfläche des Körper ungefähr 12 Mal grösser als die Querschnittsfläche der Einlassöffnung 21. Bei einer derartigen Bemessung des Körpers 7 ist also das Verhältnis zwischen der quer zu den radialen Strömungsrichtungen verlaufenden Querschnittsfläche des Körpers 7 und der Querschnittsfläche der Einlassöffnung 21 mindestens im grössten Teil des Körpers 7 grösser als das gemäss der Einleitung bei bekannten Katalysatoren mit axial durchströmtem Katalysator-Körper typischerweise ungefähr fünf bis fünfzehn betragendes Verhältnis zwischen der Querschnittsfläche des Katalysator-Körpers und der Querschnittsfläche der Einlassöffnung des Katalysators. Wie schon beschrieben, kann das Volumen der Durchgänge 13 des Katalysator-Körpers 7 beispielsweise 70% bis etwa 90% des gesamten Volumens des Katalysator-Körpers 7 betragen, so dass der Volumenanteil der Durchgänge 13 am Gesamtvolumen des Katalysator-Körpers 7 also relativ gross ist. Wie ebenfalls schon geschrieben, wird das Abgas gleichmässig auf alle Durchgänge 13 des Katalysator-Körpers 7 verteilt. Aus diesen Gründen kann die Strömungsgeschwindigkeit des Abgases im Katalysator-Körper daher bei einem erfindungsgemässen Katalysator mit den in der Figur 1 gezeichneten Proportionen beträchtlich kleiner sein als bei bekannten, axial durchströmte Katalysator-Körper aufweisenden Katalysatoren.

Bei einem erfindungsgemässen Katalysator der anhand der Figuren 1 bis 3 beschriebenen Art kann also sowohl der beim Ausströmen des Abgases aus dem Einlass in den Umlenk-Hohlraum 25 entstehende Druckverlust als auch der zwischen der Mündung der Einlassöffnung 21 und der Abgas-Eintrittsfläche 7a des Katalysator-Körpers 7 entstehende Druckverlust verhältnismässig klein und insbesondere kleiner sein als bei den bekannten Katalysatoren. Des weiteren kann auch der im Katalysator-Körper 7 entstehende Druckverlust relativ klein sein. Der vom Katalysator insgesamt erzeugte Druckverlust kann - bei gleichen Abgasmengen pro Zeiteinheit und bei ungefähr gleichem Volumen des Katalysator-Körpers - gegenüber dem von aus der Praxis bekannten Katalysatoren mit axial durchströmtem Körper verursachten Druckverlust beispielsweise etwa um 20% bis 70% verkleinert werden.

Die gleichmässige Verteilung des Abgases auf die verschiedenen Durchgänge 13 bewirkt, dass die Durchflussrate und die Stromdichte - d.h. das Produkt Dichte mal Strömungsgeschwindigkeit - bei der äussern Mantelfläche des Körpers in allen Durchgängen annähernd gleich gross ist. Die Stromdichte wird entlang dem radialen Strömungsweg nach innen zwar grösser, ist aber bei jeder quer zur Strömungsrichtung durch den Körper 7 verlaufenden, kreiszylindrischen Querschnittsfläche über die ganze Querschnittsfläche konstant. Eine solche homogene Durchströmung des Körpers 7 ergibt eine optimale Ausnutzung des katalytisch aktiven Materials des Katalysator-Körpers und ermöglicht dadurch eventuell, bei gegebener Menge des zu behandelnden Abgases das Volumen des Katalysator-Körper kleiner zu bemessen als bei einem bekannten Katalysator mit einem axial durchströmten Körper. Dadurch kann dann auch die Menge des erforderlichen katalytisch aktiven Materials, d.h. Edelmetalls, reduziert werden, so dass ein erfindungsgemässer Katalysator auch kostengünstiger herstellbar ist als ein bekannter Katalysator mit achsparallel durchströmtem Katalysator-Körper.

Der in der Figur 5 gezeichnete Katalysator 41 weist ein Gehäuse 43 auf, das gleich oder ähnlich wie das Gehäuse 3 ausgebildet ist und einen zylindrischen Mantel 43a, zwei Endwände 43b, 43c und zwei Anschluss-Stutzen besitzt, die als Einlass 43d bzw. Auslass 43e dienen. Im Innenraum des Gehäuses 43 ist ein Katalysator-Körper 47 angeordnet, wobei das Gehäuse 43 und der Körper 47 eine gemeinsame Achse 45 haben und mindestens im allgemeinen rotationssymmetrisch zu dieser sind. Der Körper 47 ist ringförmig und besitzt eine äussere Mantelfläche und/oder Abgas-Eintrittsfläche 47a sowie eine innere Mantelfläche und/oder Abgas-Austrittsfläche 47b. Die beiden Mantelflächen 47a, 47b sind in Richtung vom Einlass 43d zum Auslass 43e hin konisch nach aussen geneigt, wobei beide Mantelflächen mit der Achse 45 den gleichen Winkel bilden. An der dem Einlass zugewandten Stirnseite des Körpers 47 ist ein aus einer ebenen Scheibe bestehendes Leitelement 49 mit einer ebenen Leitfläche 49a angeordnet, das einen konischen, glatt an die Mantelfläche 47a anschliessenden Rand hat. Im übrigen ist der Katalysator 41 gleich oder ähnlich ausgebildet wie der Katalysator 1 und hat auch ähnliche Eigenschaften wie dieser.

Der in der Figur 6 ersichtliche Katalysator 61 weist wiederum ein Gehäuse 63 auf, das im allgemeinen rotationssymmetrisch zu einer Achse 65 sowie ähnlich wie das Gehäuse 3 ausgebildet ist und einen zylindrischen Mantel 63a, zwei Endwände 63b, 63c, einen Einlass 63d, einen Auslass 63e sowie eine von der Innenfläche der Endwand 63b gebildete Gegenfläche 63i aufweist. Das Gehäuse 63 enthält einen Kern, der bei dieser Variante des Katalysators zwei ringförmige Katalysatorkörper, nämlich einen ersten Katalysator-Körper 67 und einen zweiten Katalysator-Körper 69 aufweist. Die beiden Katalysator-Körper 67, 69 haben je eine äussere, zylindrische Mantelfläche 67a bzw. 69a, eine innere, zylindrische Mantelfläche 67b bzw. 69b und zwei ebene Stirnflächen. Im übrigen besitzen die beiden Katalysator-Körper 67, 69 Durchgänge, so dass die Körper 67, 69 analog wie der Katalysator-Körper 7 in im allgemeinen radialen Richtungen gasdurchlässig sind. Der erste Körper 67 liegt mit seiner einen Stirnfläche an der Endwand 63b an. Der zweite Körper 69 liegt mit seiner dem Körper 67 abgewandten Stirnfläche an der Endwand 63c an. Zwischen den einander zugewandten Stirnflächen der beiden kreisringförmigen Körper 67, 69 ist ein aus einer ebenen, kreisförmigen, kompakten Scheibe bestehendes Leitelement 75 angeordnet. Der mittlere, sich in axialer Projektion innerhalb des ringförmigen Körpers 67 befindende Bereich der der Endwand 63b zugewandten Fläche des Leitelements 75 dient als Leitfläche 75a. Die beiden Körper 67, 69 sind fest und beispielsweise mindestens einigermassen oder vollkommen dicht mit den Endwänden 63b, 63c und mit dem Leitelement 75 verbunden.

Die beiden ringförmigen Katalysator-Körper 67, 69 haben zum Beispiel den gleichen Aussendurchmesser $d_a$, so dass ihre äussern Mantelflächen 67a bzw. 69a und auch der Rand des Leitelements 75 miteinander fluchten. Der Innendurchmesser $d_c$ des ersten Körpers 67 ist grösser als die Summe $d_i + 2r$, wobei $d_i$ und r die gleiche Bedeutung wie beim Katalysator 1 haben. Ferner ist der Innendurchmesser $d_c$ des ersten Körpers 67 zum Beispiel grösser als der gleich wie der Innendurchmesser des Körpers 7 des Katalysators 1 mit $d_b$ bezeichnete Innendurchmesser des zweiten Körpers 69. Der Durchmesser $d_c$ ist vorzugsweise mindestens dreimal oder noch besser mindestens viermal oder eventuell sogar mindestens fünfmal grösser als der Einlass-Innendurchmesser $d_i$. Dementsprechend hat der ebenfalls den Durchmesser $d_c$ aufweisende Rand der Leitfläche 75a von der Achse 65 einen Abstand, der vorzugsweise mindestens das 1,5-fache oder besser mindestens das 2-fache oder eventuell sogar mindestens das 2,5-fache des Einlass-Innendurchmessers $d_i$ beträgt. Zudem hat der erste Körper 67 zum Beispiel eine kleinere axiale Abmessung als der zweite Körper 69. Dementsprechend hat der erst Körper 67 ein wesentlich kleineres Volumen als der zweite Körper 69.

Der Einlass 63d begrenzt eine Einlassöffnung 81, die bei der Mündungsfläche 83 in den Umlenk-Hohlraum 85 mündet, welcher auf einer Seite von der Leitfläche 75a und auf der dieser gegenüberstehenden Seite von der Gegenfläche 63i sowie von der Mündungsfläche 83 begrenzt ist. Der Umlenk-Hohlraum 85 bildet zudem einen von der inneren Mantelfläche 67b des ersten Körpers 67 umschlossen, inneren Hohlraum. Zwischen dem Mantel 63a des Gehäuses und den beiden Körpern 67 bzw. 69 sowie dem Leitelement 75 ist ein zusammenhängender, sich über beide äusseren Mantelflächen 67a, 69a erstreckender, äusserer Hohlraum 87 vorhanden. Der vom zweiten Körper 69 umschlossene, innere Hohlraum 89 ist durch das Leitelement 75 - abgesehen von der Verbindung über die Durchgänge der beiden Katalysator-Körper 67, 69 - gasdicht getrennt. Der Hohlraum 89 hängt ferner mit der vom Auslass 65e begrenzten Auslassöffnung 91 zusammen.

Beim Betrieb des Katalysators 61 strömt das Abgas gemäss den in der Figur 6 gezeichneten Pfeilen durch die Einlassöffnung 81 in den Umlenk-Hohlraum 85 und wird diesem radial nach aussen umgelenkt, so dass es zu einem an die innere Mantelfläche 67b des ersten Katalysator-Körpers 67 angrenzenden Randbereich des Umlenk-Hohlraums 85 strömt. Darnach dringt das Abgas bei der innern Mantelfläche 67b in den ersten Körper 67 ein und strömt radial durch diesen hindurch in den äussern Hohlraum 87. In diesen strömt das Abgas zur äussern Mantelfläche 69a des zweiten Körpers 69. Danach strömt das Abgas durch diesen hindurch radial nach innen in den innern Hohlraum 89 und schliesslich durch die Auslassöffnung 91 aus dem Gehäuse 63 heraus.

Beim Katalysator 61 dienen also die innere Mantelfläche 67b des ersten Körpers 67 und die äussere Mantelfläche 69a des zweiten Körpers 69 als Abgas-Eintrittsflächen 67b bzw. 69a. Ferner dienen die äussere Mantelfläche 67a und die innere Mantelfläche 69b als Abgas-Austrittsflächen 67a bzw. 69b. Der Abstand h der Leitfläche 75a von der Gegenfläche 63i und von der Mündungsfläche 83 ist beim Katalysator 61 gleich der axialen Abmessung des ersten Katalysator-Körpers 67. Damit diese axiale Abmessung ausreichend gross ist, kann das Verhältnis $h/d_i$ eventuell etwas grösser als der Wert gemacht werden, bei welchem der Druckverlust-Koeffizient Z ein Minimum hat. Das Verhältnis $h/d_i$ kann jedoch zum Beispiel noch kleiner als 1 sein und vielleicht etwa höchstens oder ungefähr 0,7 betragen. Der sich beim Umlenken des Abgases im Umlenk-Hohlraum 85 ergebende Druckverlust-Koeffizient Z ist dann immer noch kleiner als 1 und der Druckverlust dementsprechend kleiner als der Staudruck des die Einlassöffnung 81 durchströmenden Abgases. Eventuell kann der Abstand h sogar nur höchstens 50% oder sogar nur höchstens 25% des Innendurchmessers $d_i$ betragen, so dass der Wert des Verhältnisses $h/d_i$ sich wie beim Katalysator 1 mindestens annähernd beim Minimum der in der Figur 4 gezeichneten Kurven befindet. Im übrigen wird das Abgas beim Einströmen in die Katalysator-Körper 67, 69 gleichmässig über deren Durchgänge verteilt. Da das Abgas nach dem Einströmen in das Gehäuse 63 zuerst in den Körper 67 einströmt und da dieser ein relativ kleines Volumen hat, wird der erste Katalysator-Körper 67 beim Starten eines mit dem Katalysator 61 verbundenen Verbrennungsmotors rasch auf die zum Auslösen der gewünschten chemischen Reaktionen erforderliche Temperatur erhitzt. Der erste Katalysator-Körper 67 dient dementsprechend vor allem als Start-Katalysator-Körper, um in der Startphase rasch eine katalytische Behandlung des Abgases auszulösen. Wenn nach der Startphase beide Katalysator-Körper 67, 69 die für die katalytische Behandlung erforderliche Temperatur aufweisen, findet die katalytische Behandlung dann zum grössern Teil in dem ein grösseres Volumen besitzenden, zweiten Katalysator-Körper 69 statt, der also als Haupt-Katalysator-Körper dient. Im übrigen hat der Katalysator 61 ähnliche Eigenschaften wie der Katalysator 1.

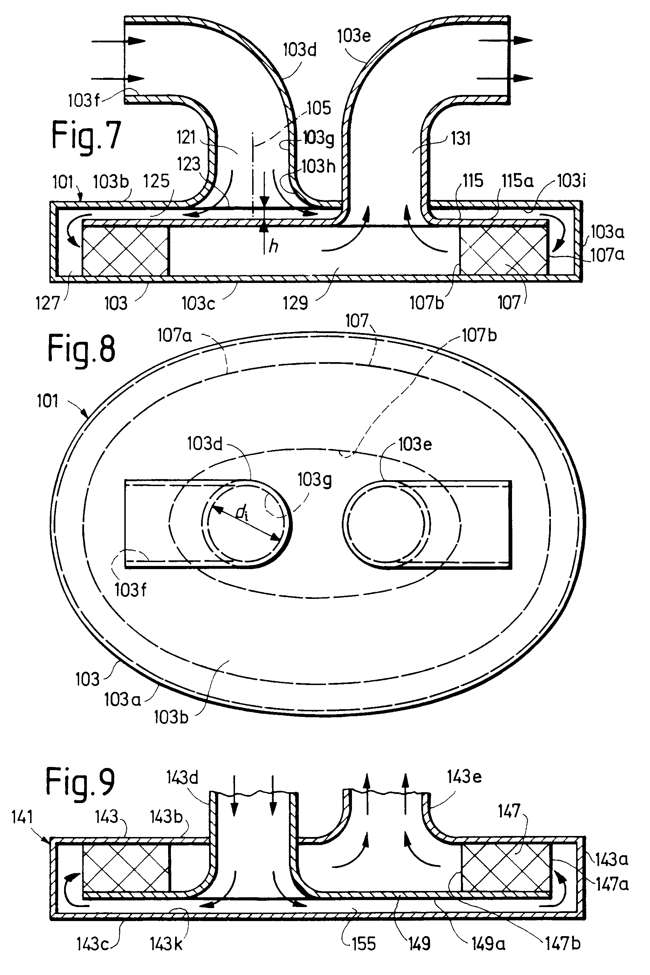

Der in den Figuren 7 und 8 gezeichnete Katalysator 101 weist ein Gehäuse 103 auf. Dieses besitzt einen Mantel 103a mit der Form eines kurzen, ungefähr ovalen oder elliptischen Zylinders, zwei ebene Endwände 103b bzw. 103c, einen Einlass 103d und einen Auslass 103e. Der Einlass und der Auslass weisen je einen gebogenen Stutzen - d.h. Rohrkrümmer - mit einem rechtwinklig von der Endwand 103b weg und beispielsweise gemäss der Figur 7 vertikal nach oben ragenden Abschnitt auf, der über einen Bogen mit einem zur Endwand 103b parallelen, freien Endabschnitt verbunden ist. Die von der Endwand 103b wegragenden Abschnitte des Einlasses und des Auslasses sind zum Beispiel in der in der Figur 8 gezeichneten Draufsicht spiegelsymmetrisch zu einer Ebene durch die kürzere Achse des Ovals bzw. der Ellipse, das bzw. die vom Mantel 103 gebildet wird. Der gebogene Einlass 103d definiert eine Achse 105, von der in der Figur 7 nur der zur Endwand 103b rechtwinklige Abschnitt gezeichnet ist. Die freien Endabschnitte des Einlasses 103d und des Auslasses 103e sind zum Beispiel miteinander fluchtend und haben Achsen und einander abgewandte Öffnungen. Der zu den Endwänden rechtwinklige, kreiszylindrische Abschnitt ist über einen sich erweiternden Übergangsabschnitt mit der Endwand 103b verbunden. Die Innenfläche 103f des Einlasses besitzt dementsprechend unter anderem einen zum gezeichneten Abschnitt der Achse 105 parallelen sowie rotationssymmetrischen, zylindrischen Innenflächenabschnitt 103g und einen in einem entlang der Achse 105 verlaufenden Schnitt nach aussen gebogenen Übergangsflächenabschnitt 103h, der den Abschnitt 103g stetig mit der als Gegenfläche 103i dienende Innenfläche der Endwand 103b verbindet.

Ein im Gehäuse angeordneter, sowie befestigter, ringförmiger Katalysator-Körper 107 hat eine äussere Mantelfläche 107a und/oder Abgas-Eintrittsfläche 107a mit ovaler oder elliptischer Umrissform und eine innere Mantelfläche 107b und/oder Abgas-Austrittsfläche 107b, die beispielsweise ebenfalls oval oder elliptisch und parallel zur Fläche 107a ist. Der Katalysator-Körper 107 besitzt im allgemeinen zu den Endwänden 103b, 103c parallele, von seiner äussern Mantelfläche und/oder Abgas-Eintrittsfläche 107a zu seiner inneren Mantelfläche und/oder Abgas-Austrittsfläche 107b führende Durchgänge und ist zum Beispiel analog wie der Katalysator-Körper 7 aus wellenförmigen Scheiben gebildet. Der Katalysator-Körper 107 liegt fest und mindestens einigermassen dicht an der Endwand 103c an und ist auf seiner dieser abgewandten Stirnseite mit einem Leitelement 115 verbunden, der aus einer Scheibe besteht und dessen der Endwand 103b zugewandten Seite eine ebene Leitfläche 115a bildet. Der Auslass 103e ist durch ein in der Endwand 103b vorhandenes Loch hindurch dicht in den Innenraum des Gehäuses 103 eingeführt und - zum Beispiel über einen sich nach aussen bogenförmig erweiternden übergangsabschnitt - bei einem Loch des Leitelements 115 dicht mit diesem verbunden, wobei sich das letztgenannte Loch in der in der Figur 8 gezeichneten Draufsicht in dem von der innern Mantelfläche 107b umschlossenen Bereich befindet.

Die vom Einlass 103d begrenzte Einlassöffnung 121 mündet bei der Mündungsfläche 123 in den zwischen der Leitfläche 115a und der dieser gegenüberstehenden Gegenfläche 103i vorhandenen Umlenk-Hohlraum 125, der mit dem zwischen dem Mantel 103a und der äussern Mantelfläche 107a vorhandenen, äussern Hohlraum 127 zusammenhängt. Der von der innern Mantelfläche 107b umschlossene, innere Hohlraum 129 hängt mit der vom Auslass 103e begrenzten Auslassöffnung 131 zusammen.

Das Verhältnis zwischen dem Abstand h der Leitfläche 115a von der Gegenfläche 103i und dem Einlass-Innendurchmesser $d_i$ kann zum Beispiel etwa gleich gross sein wie beim Katalysator 1. Beim Katalysator 101 ist der Abstand des Randes der Leitfläche 115a von der Achse 105 des Einlasses 103d für die verschiedenen Randstellen verschieden. Die sich am nächsten bei der Einlass-Achse 105 befindende Stelle des Randes der Leitfläche 115a hat von der Achse 105 einen Abstand, der vorzugsweise mindestens das 1,5-fache, eventuell mindestens das 2-fache oder sogar mindestens das 2,5-fache des Einlass-Innendurchmessers $d_i$ beträgt.

Während die Katalysatoren 1, 41, 61 zum Beispiel mit parallel zur Fahrrichtung eines Automobils verlaufenden Achsen 5 bzw. 45 bzw. 65 in die Auspuffanlage eines Automobils eingebaut werden können, kann der Katalysator 101 zum Beispiel derart in eine Auspuffanlage eines Automobils eingebaut werden, dass der zylindrische Innenflächenabschnitt 103g des Einlasses und der zu diesem Innenflächenabschnitt gehörende Abschnitt der Achse 105 rechtwinklig zur Fahrrichtung und etwa vertikal verlaufen. Im übrigen hat der Katalysator 101 ähnliche Eigenschaften wie der Katalysator 1.

Der in der Figur 9 ersichtliche Katalysator 141 besitzt ein Gehäuse 143 mit einem Mantel 143a, zwei Endwänden 143b, 143c, einen Einlass 143d und einen Auslass 143e. Im Gehäuse ist ein ringförmiger Katalysator-Körper 147 mit einer äussern Mantelfläche 147a und einer innern Mantelfläche 147b angeordnet. Der Mantel 143a des Gehäuses 143 und der Katalysator-Körper 147 haben zum Beispiel gleiche oder ähnliche Umrissformen wie die entsprechenden Teile des Katalysators 101. Desgleichen können auch die sich in der Figur 9 oberhalb der Endwand 143b befindenden, nur teilweise gezeichneten Teile des Einlasses 143d und des Auslasses 143e ähnlich ausgebildet sein wie beim Katalysator 101. Der Katalysator 141 unterscheidet sich jedoch vom Katalysator 101 dadurch, dass die Leitfläche 143k durch die Innenfläche der Endwand 143c gebildet ist und dass der Körper 147 an der Endwand 143b anliegt. Ferner ist an der der Endwand 143b abgewandten Stirnseite des Katalysator-Körpers 147 ein aus einer Scheibe bestehendes Abschlusselement 149 befestigt, dessen der Leitfläche 143k zugewandte Seite eine ebene, von der Leitfläche 143k in Abstand stehende Gegenfläche 149a bildet. Zudem ist der Einlass 143d durch ein Loch in der Endwand 143b hindurch dicht in den Innenraum des Gehäuses 143 eingeführt, ragt durch den von der innern Mantelfläche 147b des Katalysator-Körpers 147 umschlossenen Raumbereich hindurch und ist bei einem im Abschlusselement 149 vorhandenen Loch dicht mit diesem verbunden. Beim Katalysator 141 befindet sich der Umlenk-Hohlraum 155 dementsprechend zwischen der Endwand 143c und dem Abschlusselement 149. Im übrigen kann der Katalysator 141 in ähnlicher Weise eingebaut werden wie der Katalysator 101.

Beim Betrieb des Katalysators 141 strömt das Abgas aus dem Einlass in den Umlenk-Hohlraum 155 und danach um den Rand der Gegenfläche 149a herum. Der Rand der Gegenfläche 149a kann - im Vergleich zum Einlass-Innendurchmesser - etwa den gleichen Mindestabstand von der Einlass-Achse haben wie beim Katalysator 101.

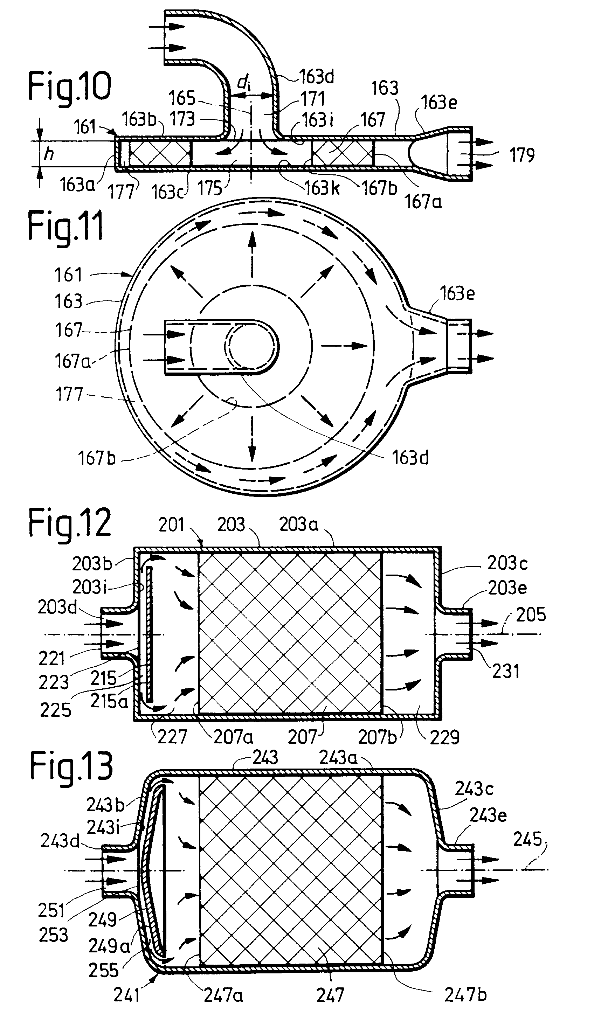

Der in den Figuren 10 und 11 ersichtliche Katalysator 161 weist ein Gehäuse 163 auf, dessen Mantel 163a einen hohlen Kreiszylinder oder einen hohlen Zylinder mit einer ein wenig von einem Kreis abweichenden, etwa ungefähr elliptischen oder ovalen und eventuell etwas asymmetrischen Umrissform bildet. Das Gehäuse hat bei den beiden Enden des Mantels 163a je eine ebene Endwand 163b bzw. 163c. Die Endwand 163b ist mit einem von ihr wegragenden, ein wenig exzentrisch angeordneten, zu seinem freien Ende hin abgebogenen, einen Einlass 163d bildenden Rohrkrümmer versehen. Dessen sich näher bei der Endwand 163b befindender, zylindrischer Abschnitt ist koaxial zu einem zur Endwand 163b rechtwinkligen Abschnitt der Achse 165 des Einlasses und über einen übergangsabschnitt, der sich in einem entlang der Achse 165 verlaufenden Schnitt bogenförmig erweitert, stetig mit der Endwand 163b verbunden. Der Mantel 163a ist bei seiner am weitesten vom Einlass 163d entfernten Umfangsstelle mit einem nach aussen ragenden, als Auslass 163e dienenden Stutzen versehen. Im Gehäuse 163 ist ein kreisringförmiger Katalysator-Körper 167 angeordnet, der beispielsweise zur Achse 165 koaxial ist. Der Körper 167 hat eine äussere, kreiszylindrische Mantelfläche 167a, eine innere, kreiszylindrische Mantelfläche 167b, sowie zwei im allgemeinen ebene Stirnflächen und ist bei den letzteren fest und dicht mit den Endwänden 163b bzw. 163c verbunden. Der Körper 167 ist ferner mit im allgemeinen radialen Durchgängen versehen. Bei dieser Variante des Katalysators ist die Leitfläche 163k durch denjenigen Bereich der Innenfläche der Endwand 163c gebildet, der in einer zu den Endwänden rechtwinkligen Projektion vom ringförmigen Körper 167 umschlossen ist. Die Gegenfläche 163i ist durch den in der besagten Projektion vom Körper 167 umschlossenen Bereich der Innenfläche der Endwand 163b gebildet.

Der Einlass 163d begrenzt eine Einlassöffnung 171, die bei der Mündungsfläche 173 in den zwischen der Leitfläche 163k sowie der Gegenfläche 163i vorhandenen und von der innern Mantelfläche 167b umschlossenen Umlenk-Hohlraum 175 mündet und/oder inneren Hohlraum 175. Zwischen dem Mantel 163a des Gehäuses 163 und der äussern Mantelfläche 167a des Körpers 167 ist ein äusserer Hohlraum 177 vorhanden, der mit der vom Auslass begrenzten Auslassöffnung 179 zusammenhängt. Wie man aus der Figur 11 entnehmen kann, hat die radial zur Achse 165 gemessene Abmessung des äusseren Hohlraums 177 bei der dem Auslass 163e diagonal gegenüberstehenden Umfangsstelle ein Minimum und nimmt von dieser Umfangsstelle aus entlang dem Umfang in beiden Richtungen bis zum Auslass 163e hin stetig zu.

Die freien Endabschnitte des Einlasses 163d und des Auslasses 163e des Katalysators 161 ragen voneinander weg, wobei die zu ihnen gehörenden Abschnitte der Achsen des Einlasses bzw. des Auslasses zu einander parallel, aber gegeneinander versetzt sind. Der Katalysator 161 kann zum Beispiel derart in die Auspuffanlage eines Automobils eingebaut werden, dass die Endwände 163b, 163c und die freien Endabschnitte des Einlasses und des Auslasses parallel zur Fahrrichtung sind. In der Figur 10 sind noch der Innendurchmesser $d_i$ des kreiszylindrischen, von der Endwand 163b wegragenden Einlassabschnitts und der Abstand h der Leitfläche 163k von der Gegenfläche 163i und der Mündungsfläche 173 angegeben. Das Verhältnis $h/d_i$ ist beim Katalysator 161 - wie schon beim Katalysator 61 - vielleicht grösser als der optimale Wert, kann jedoch noch weniger als 1 und zum Beispiel höchstens oder ungefähr 0,7 betragen.

Beim Betrieb des Katalysators 161 strömt das Abgas in der in den Figuren 10 sowie 11 durch Pfeile dargestellten Art durch den Katalysator 161. Das Abgas gelangt nämlich durch die Einlassöffnung 171 in den Umlenk-Hohlraum 175, wird in diesem durch die Leitfläche 163k in eine im allgemeinen zur Achse 165 radiale Richtung umgelenkt, strömt dann durch die Durchgänge des Körpers 167 hindurch und gelangt anschliessend in den äusseren Hohlraum 177. In diesem wird das aus den Durchgängen ausströmende Abgas gesammelt, wobei mindestens der grösste Teil des Abgases einem Umfangsabschnitt der äusseren Mantelfläche 167a des Körpers 167 entlang strömt, bis es die Auslassöffnung 179 erreicht und durch diese ausströmt. Der Katalysator 161 hat im übrigen ähnliche Betriebseigenschaften wie der Katalysator 1 und die andern anhand der Zeichnung beschriebenen Katalysatoren.

Der in der Figur 12 ersichtliche Katalysator 201 weist ein Gehäuse 203 mit einer Achse 205 auf. Der Mantel 203a des Gehäuses 201 ist zum Beispiel zylindrisch und rotationssymmetrisch zur Achse 205. Das Gehäuse 203 hat zwei zur Achse 205 rechtwinklige, radiale Endwände 203b, 203c, von denen die eine mit einem Einlass 203d und die andere mit einem Auslass 203e versehen ist. Der Einlass und Auslass bestehen wie beim Katalysator 1 je aus einem Stutzen mit einem kreiszylindrischen Innenflächenabschnitt, der über einen sich im Axialschnitt bogenförmig erweiternden Übergangsflächenabschnitt stetig mit den Innenflächen der Endwände 203b bzw. 203c verbunden ist. Die Innenfläche der Endwand 203b bildet eine Gegenfläche 203i.

Der Katalysator 201 besitzt einen im Gehäuse 203 befestigten, zylindrischen Katalysator-Körper 207, dessen Mantelfläche dicht mit dem Mantel 203a des Gehäuses verbunden ist. Der Körper 207 ist in im allgemeinen axialer Richtung gasdurchlässig und hat an seinem dem Einlass zugewandten Ende eine ebene Stirnfläche und/oder Abgas-Eintrittsfläche 207a und an seinem andern Ende eine ebene Stirnfläche und/oder Abgas-Austrittsfläche 207b. Der Körper 207 kann zum Beispiel einen keramischen oder metallischen Träger bekannter Art mit axialen Durchgängen aufweisen, deren Begrenzungen mit katalytisch aktivem Material beschichtet sind.

Im Innenraum des Gehäuses ist zwischen der Endwand 203b und dem Katalysator-Körper 207 ein aus einer ebenen Scheibe bestehendes Leitelement 215 angeordnet, das sowohl in Abstand von der Endwand 203b als auch in Abstand vom Katalysator-Körper steht und dessen der Endwand 203b zugewandte Seite eine ebene Leitfläche 215a bildet. Zwischen dem Rand des Leitelements 215 und dem Mantel 203a des Gehäuses ist ein Zwischenraum vorhanden. Das Leitelement 215 ist mit nicht gezeichneten Befestigungselementen am Mantel 203a und/oder an der Endwand 203b des Gehäuses befestigt. Das Leitelement 215 ist abgesehen von einigen wenigen allenfalls für seine Befestigung vorgesehenen und von den Befestigungselementen durchdrungenen Löchern kompakt - d.h. lochfrei - und gasundurchlässig. Der zwischen dem Mantel 203a und dem Leitelement vorhandene Zwischenraum bildet einen Ringspalt, der möglicherweise durch die genannten Befestigungselemente in Sektoren unterteilt sein kann.

Die vom Einlass 203d begrenzte Einlassöffnung 221 mündet bei der in der gleichen Ebene wie die Gegenfläche 203i liegenden Mündungsfläche 223 in den zwischen der Leitfläche 215a und der Gegenfläche 203i vorhandenen Umlenk-Hohlraum 225, der um den Rand des Leitelements 215 herum mit dem zwischen diesem und der Stirnfläche und/oder Abgas-Eintrittsfläche 207a vorhandenen, stirnseitigen Hohlraum 227 verbunden ist. Zwischen der Endwand 203c und der Stirnfläche und/oder Abgas-Austrittsfläche 207b ist ein stirnseitiger Hohlraum 229 vorhanden, der mit der vom Auslass 203e begrenzten Auslassöffnung 231 zusammenhängt. Das Verhältnis zwischen dem axialen Abstand der Leitfläche 215a von der Gegenfläche 203i sowie von der Mündungsfläche 223 und zwischen dem Innendurchmesser des zylindrischen Abschnitts des Einlasses 203d kann im gleichen Wertbereich liegen wie beim Katalysator 1. Das Verhältnis zwischen dem sich im Axialschnitt ergebenden Krümmungsradius des den zylindrischen Innenflächenabschnitt des Einlasses mit der Gegenfläche 203i verbindenden Übergangsflächenabschnitts zum Innendurchmesser des Einlasses kann ebenfalls in dem für den Katalysator 1 angegebenen Bereich liegen. Der Abstand der einander zugewandten Flächen des Körpers 207 und des Leitelements 215 ist vorzugsweise grösser als der Abstand der Flächen 203i, 215a.

Beim Betrieb wird das durch die Einlassöffnung 221 strömende Abgas im Umlenk-Hohlraum 225 durch die Leitfläche 215a in eine zur Achse 205 radiale Richtung umgelenkt, strömt anschliessend um den Rand des Leitelements 215 herum in den Hohlraum 227, danach in axialer Richtung durch den Katalysator-Körper 207 hindurch in den Hohlraum 229 und von diesem durch die Auslassöffnung 231 hindurch aus dem Gehäuse 203 hinaus. Das Abgas kann beim Einströmen in das Gehäuse 203 des Katalysators 201 wie beim Katalysator 1 mit kleinem Druckverlust umgelenkt und im Hohlraum 227 gleichmässig über die Stirnfläche und/oder Abgas-Eintrittsfläche 207a verteilt worden.

Der in der Figur 13 gezeichnete Katalysator 241 weist ein Gehäuse 243 auf, das beispielsweise im allgemeinen rotationssymmetrisch zu einer Achse 245 ist und einen zylindrischen Mantel 243a sowie zwei Endwände 243b, 243c mit einem Einlass 243d bzw. Auslass 243e besitzt. Der Einlass und der Auslass bestehen wie zum Beispiel bei den Katalysatoren 1, 201 aus einem Stutzen mit einem zylindrischen Abschnitt, der über eine sich bogenförmig erweiternden Übergangsabschnitt mit der betreffenden Endwand verbunden ist. Die Endwände 243b, 243c sind jedoch beim Katalysator 241 geneigt und haben anschliessend an die Übergangsabschnitte der Stutzen einen konischen Hauptabschnitt, der an seinem äussern Ende über einen gebogenen Übergangsabschnitt mit dem Mantel 243a verbunden ist. Die innere Fläche der Endwand 243b bildet eine Gegenfläche 243i. Im Gehäuse 243 ist ein Katalysator-Körper 247 angeordnet, der eine Stirnfläche und/oder Abgas-Eintrittsfläche 247a sowie eine Stirnfläche und/oder Abgas-Austrittsfläche 247b besitzt und in axialer Richtung gasdurchlässig ist. Das zwischen der Endwand 243b und dem Körper 247 angeordnete Leitelement 249 hat eine der Endwand 243b zugewandte Leitfläche 249a. Der dem konischen Abschnitt der Endwand 243b gegenüberstehende Abschnitt der Leitfläche 249a ist ebenfalls konisch und in den durch die Achse 245 verlaufenden Schnitten parallel zur ihr gegenüberstehenden Gegenfläche 243i. Der zentrale, sich in axialer Projektion im Bereich des Einlasses 243d befindende Abschnitt der Leitfläche 249a ist zum Beispiel im Axialschnitt derart abgerundet, dass er sich stetig an den konischen Abschnitt anschliesst, könnte aber stattdessen ebenfalls konisch oder eben und rechtwinklig zur Achse 245 sein. Der Randbereich der Leitfläche ist beispielsweise zum Körper 247 hin abgebogen.

Die vom Einlass 243d begrenzte Einlassöffnung 251 mündet bei einer Mündungsfläche 253 in den Innenraum des Gehäuses. Unter der Mündungsfläche 253 wird hier die ebene, zur Achse 245 rechtwinklige Kreisfläche verstanden, deren Rand sich beim äussern Rand des bogenförmig erweiternden Übergangsflächenabschnitts der Einlass-Innenfläche befindet. Die Leitfläche 249a kann sich wie bei den vorher beschriebenen Katalysatoren vollständig ausserhalb der Einlassöffnung, d.h. auf deren der ebenen Mündungsfläche 253 abgewandter Seite befinden. Es wäre jedoch auch möglich, dass der zentrale Abschnitt der Leitfläche 249a ein wenig in die Einlassöffnung hineinragt. In diesem Fall soll aber die Leitfläche selbstverständlich mindestens vom Rand der Mündungsfläche 253 und von der Gegenfläche 243i in Abstand stehen Der zwischen der Leitfläche 249a und der Gegenfläche 243i vorhandene Raumbereich dient wiederum als Umlenk-Hohlraum 255. Die Leitfläche 249a und die Gegenfläche 243i oder - genauer gesagt - die konischen und also im Axialschnitt ebenen Abschnitte dieser Flächen bilden mit der Mündungsfläche 253 einen höchstens 30° und dementsprechend mit der Achse 245 einen mindestens 60° und zum Beispiel mindestens 70° bis etwa höchstens 85° betragenden Winkel. Zur Klarstellung sei angemerkt, dass unter dem Abstand der Leitfläche 249a von der Gegenfläche 243i und vom Rand der Mündungsfläche 253 beim Katalysator 241 entsprechend der üblichen Abstandsdefinition die Länge der kürzesten Verbindungsstrecke zwischen den sich gegenüberstehenden Flächen verstanden wird und dass dieser Abstand also nicht parallel zur Achse 245, sondern rechtwinklig zu den Flächen 249a, 243i gemessen wird. Das Verhältnis zwischen dem derart gemessenen Abstand und dem Innendurchmesser des Einlasses kann dann im gleichen Bereich liegen, wie er beim Katalysator 1 für das Verhältnis $h/d_i$ angegeben wurde. Im übrigen ist der Katalysator 241 ähnlich ausgebildet wie der Katalysator 201.

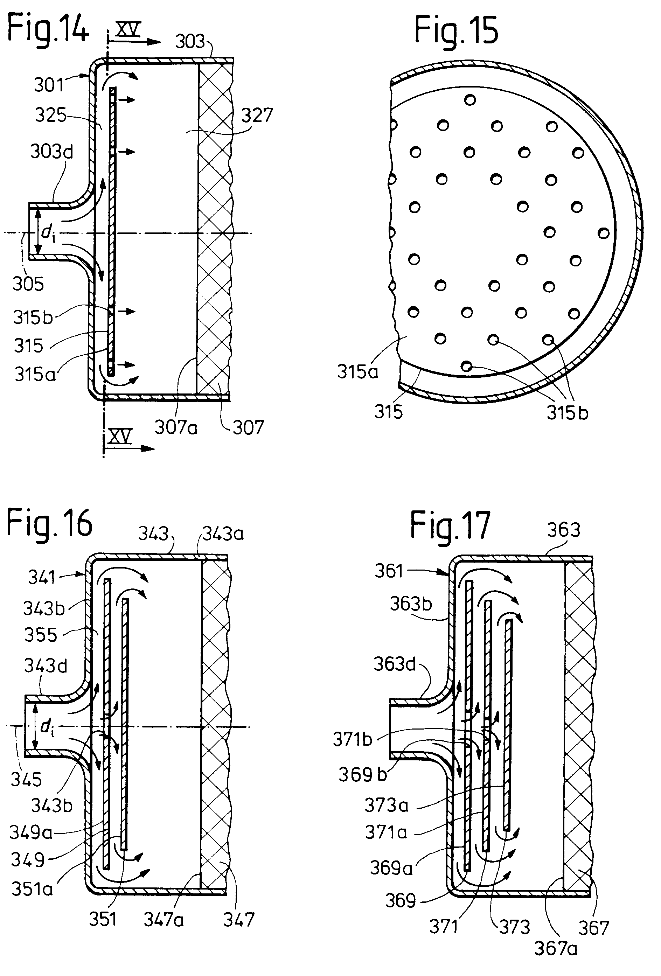

Der teilweise in den Figuren 14 und 15 gezeichnete Katalysator 301 ist weitgehend ähnlich ausgebildet wie der Katalysator 201 und besitzt ein Gehäuse 303 mit einem Einlass 303d. Mindestens der Einlass des Gehäuses ist rotationssymmetrisch zu einer Achse 305. Das Gehäuse 303 enthält einen in axialer Richtung gasdurchlässigen Katalysator-Körper 307, dessen eine, ebene Stirnfläche als Abgas-Eintrittsfläche 307a dient. Das Gehäuse enthält ferner ein aus einer kreisförmigen Scheibe bestehendes Leitelement 315 mit einer Leitfläche 315a. Das Leitelement 315 unterscheidet sich vom Leitelement 215 des Katalysators 201 jedoch dadurch, dass es eine Anzahl offener Löcher 315b besitzt, die um die Achse 305 herum auf einen äusseren, ringförmigen Flächenbereich verteilt sind. Dieser umschliesst einen kompakten, d.h. lochfreien, innern, zentralen Flächenbereich, dessen Durchmesser mindestens gleich dem Einlass- Innendurchmesser $d_i$ und vorzugsweise grösser als dieser ist. Der Durchmesser der Löcher 315b ist wesentlich kleiner als der Einlass-Innendurchmesser $d_i$ und beträgt zum Beispiel höchstens 20% des letzteren. Die insgesamt von den Löchern 315b eingenommene Fläche beträgt vorzugsweise höchstens 30% und zum Beispiel 5% bis 25% der gesamten Leitfläche 315a.

Bei der Benutzung des Katalysators 301 wird das durch den Einlass 303d in den Innenraum des Gehäuses 303 strömende Abgas im Mündungsabschnitt des Einlasses und im Umlenk-Hohlraum 325 von der Leitfläche 315a in eine ungefähr radiale Richtung umgelenkt. Ein grosser Teil des Abgases strömt dann wie beim Katalysator 201 um den Rand des Leitelements herum in den zwischen diesem und dem Katalysator-Körper 307 vorhandenen Hohlraum 327. Ein Teil des Abgases strömt jedoch vom Umlenk-Hohlraum 325 durch die Löcher 315b in den Hohlraum 327 und trägt dadurch zu einer gleichmässigen Verteilung des Abgases über die Querschnittsfläche des Katalysator-Körpers 307 bei.

Der zum Teil in der Figur 16 gezeichnete Katalysator 341 besitzt ein Gehäuse 343 mit einem Mantel 343a, einer Endwand 343b und einem Einlass 343d, der rotationssymmetrisch zur Achse 345 des Gehäuses ist. Das Gehäuse 343 enthält einen in axialer Richtung gasdurchlässigen Katalysator-Körper 347 mit einer ebenen Abgas-Eintrittsfläche 347a. Das Gehäuse enthält ein aus einer ebenen Scheibe bestehendes Haupt-Leitelement 349. Dieses bildet eine Leitfläche 349a und ist im Zentrum mit einem zur Achse 345 koaxialen, offenen Loch 349b versehen, dessen Durchmesser kleiner als der Einlass-Innendurchmesser $d_i$ ist und zum Beispiel 10% bis 50% von diesem beträgt. Zwischen dem Leitelement 349 und der Abgas-Eintrittsfläche 347a ist ein aus einer ebenen Scheibe bestehendes Zusatz-Leitelement 351 angeordnet, das sowohl vom Leitelement 349 als auch von der Abgas-Eintrittsfläche 347a in Abstand steht. Das Zusatz-Leitelement 351 hat eine dem Einlass und dem Haupt-Leitelement zugewandte Leitfläche 351a und ist abgesehen von allfälligen, zu seiner Befestigung dienenden und mindestens im wesentlichen durch Befestigungselemente ausgefüllten Löchern kompakt und lochfrei. Das Zusatz-Leitelement 351 ist insbesondere in seinem zentralen, sich in axialer Projektion hinter dem Loch 349b befindenden Bereich lochfrei. Das Haupt-Leitelement 349 ragt in axialer Projektion entlang seinem ganzen Umfang über das Zusatz-Leitelement 351 hinaus. Der Mantel 343a ist zum Beispiel kreiszylindrisch. Das Haupt-Leitelement 349 und das Zusatz-Leitelement 351 sind dann kreisförmig, wobei der Durchmesser des Zusatz-Leitelements 351 kleiner ist als derjenige des Leitelements 349.

Das durch den Einlass 343d in den Innenraum des Gehäuses 343 einströmende Abgas wird zum grössten Teil im Einlass-Mündungsabschnitt und in dem zwischen der Endwand 343b und dem Haupt-Leitelement 349 vorhandenen Umlenk-Hohlraum in eine ungefähr radiale Richtung umgelenkt und strömt danach um den Rand des Haupt-Leitelements 349 herum zur Abgas-Eintrittsfläche 347a. Ein Teil des durch den Einlass einströmenden Abgases strömt jedoch durch das zentrale Loch 349b des Haupt-Leitelements 349 hindurch, wird danach durch das Zusatz-Leitelement 351 in eine ungefähr radiale Richtung umgelenkt und strömt schliesslich um den Rand des Zusatz-Leitelements 351 herum zur Abgas-Eintrittsfläche 347a.

Der zum Teil in der Figur 17 ersichtliche Katalysator 361 besitzt ein Gehäuse 363, dessen Endwand 363b im Zentrum mit einem Einlass 363d versehen ist. Das Gehäuse enthält einen in axialer Richtung gasdurchlässigen Katalysator-Körper 367 mit einer ebenen Abgas-Eintrittsfläche 367a und ein Haupt-Leitelement 369. Dieses hat eine der Endwand 363b zugewandte Leitfläche 369a und im Zentrum ein Loch 369b. Zwischen dem Haupt-Leitelement 369 und dem Körper 367 sind zwei Zusatz-Leitelemente 371, 373 angeordnet. Die drei Leitelemente stehen in Abstand von der Endwand 363b, voneinander und von der Abgas-Eintrittsfläche 367a. Das sich zwischen dem Haupt-Leitelement 369 und dem Zusatz-Leitelement 373 befindende Zusatz-Leitelement 371 besitzt eine Leitfläche 371a und im Zentrum ein Loch 371b. Das Zusatz-Leitelement 373 hat eine Leitfläche 373a und ist abgesehen von allfälligen zu seiner Befestigung dienenden Löchern lochfrei. Die Umriss-Abmessungen der Leitelemente nehmen vom Haupt-Leitelement zum sich am nächsten beim Katalysator-Körper befindenden Zusatz-Leitelement hin ab. Der Durchmesser des Lochs 369b ist vorzugsweise kleiner als der Einlass-Innendurchmesser $d_i$. Ferner ist der Durchmesser des Lochs 371b kleiner als derjenige des Lochs 369b.

Beim Betrieb des Katalysators 361 wird ein Teil des durch den Einlass 363d in den Innenraum des Gehäuses 363 einströmenden Abgases durch die Leitfläche 369a umgelenkt. Das restliche Abgas strömt durch das Loch 369b hindurch. Ein Teil dieses Abgases wird dann durch das Leitelement 371 umgelenkt. Ferner strömt noch ein Teil des Abgases durch das Loch 371b hindurch und wird dann vom Leitelement 373 umgelenkt.

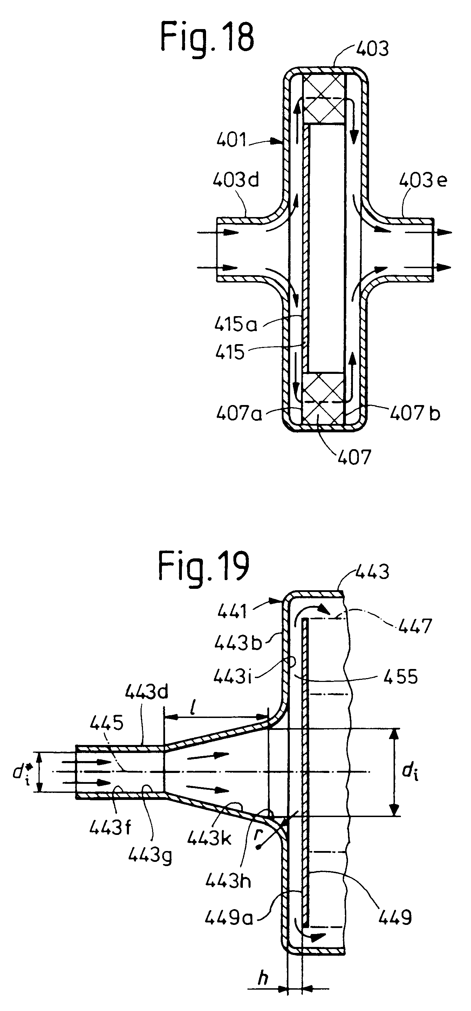

Der in der Figur 18 ersichtliche Katalysator 401 besitzt ein Gehäuse 403 mit einem Einlass 403d und einem Auslass 403e. Im Gehäuse ist ein ringförmiger, in axialer Richtung gasdurchlässiger Katalysator-Körper 407 mit einer ebenen Abgas-Eintrittsfläche 407a und einer ebenen Abgas- Austrittsfläche 407b angeordnet. Der vom Katalysator-Körper umschlossene Hohlraum ist an seinem dem Einlass zugewandten Ende durch ein Leitelement 415 dicht abgeschlossen. Dieses besitzt auf seiner dem Einlass zugewandten Seite eine ebene Leitfläche 415a. Diese ist bündig mit der Abgas-Eintrittsfläche 407a, könnte sich aber auch näher beim Einlass befinden als die Abgas-Eintrittsfläche 407a.

Beim Betrieb des Katalysators 401 wird das durch den Einlass in den Innenraum des Gehäuses 403 einströmende Abgas durch die Leitfläche 415a in radiale Richtung umgelenkt und strömt danach in axialer Richtung durch den Katalysator-Körper hindurch.

Der in der Figur 19 zum Teil gezeichnete Katalysator 441 besitzt ein Gehäuse 443 mit einer ebenen Endwand 443b, bei deren Zentrum ein Einlass 443d vorhanden ist. Dessen Innenfläche 443f besitzt einen zylindrischen Innenflächenabschnitt 443g, an den ein sich konisch erweiternder Innenflächenabschnitt 443k anschliesst. Dessen weiteres Ende ist durch einen sich im Axialschnitt erweiternden Übergangsflächenabschnitt 443h stetig mit der ebenen, radialen, von der Innenfläche der Endwand 443b gebildeten Gegenfläche 443i verbunden. Im Gehäuse befindet sich ein Leitelement 449 mit einer ebenen, der Gegenfläche 443i zugewandten Leitfläche 449a. Ferner ist im Gehäuse ein strichpunktiert angedeuteter Katalysator-Körper 447 vorhanden, der zum Beispiel ähnlich ausgebildet sein kann wie der Katalysator-Körper 7. In der Figur 19 bezeichnet $d_i$ den Durchmesser der Einlass-Innenfläche beim engeren Ende des bogenförmigen Übergangsflächenabschnitts 443h. Ferner bezeichnet $d_i^*$ den Durchmesser des zylindrischen Innenflächen-Abschnitts 443f und des engeren Endes des konischen Innenflächen-Abschnitts 443k. Bei dieser Ausführungsform des Katalysators ist also der Innendurchmesser $d_i$ etwas grösser als die lichte Weite des Einlasses, welche gleich dem Innendurchmesser $d_i^*$ ist.

In der Figur 19 sind auch noch der Krümmungsradius r und der Abstand h eingezeichnet, welche die gleiche Bedeutung haben wie bei den vorher beschriebenen Ausführungsbeispielen. Die Verhältnisse $r/d_i$ und $h/d_i$ können beim Katalysator 441 zum Beispiel etwa in den gleichen Bereichen liegen wie beim Katalysator 1. Der vom konischen Innenflächenabschnitt 443k mit der Achse 445 gebildete Winkel beträgt vorzugsweise mindestens 5°, vorzugsweise höchstens 25° und zum Beispiel 10° bis 20°. Die Länge 1 des konischen Innenflächenabschnitts beträgt vorzugsweise mindestens 100% und vorzugsweise höchstens 300% des Durchmessers $d_i$. Durch den konischen, sich in der Strömungsrichtung erweiternden Innenflächenabschnitt 443k kann der Strömungswiderstand noch zusätzlich reduziert werden. Der Druckverlust-Koeffizient Z kann dann zum Beispiel bei einem ungefähr 0,3 betragenden Verhältnis von $r/d_i$ beim Minimum einer Kurve, die den in der Figur 4 dargestellten Kurven entspricht, im Bereich von 0,3 bis 0,4 liegen.

Soweit vorgängig nichts anderes angegeben wurde, können übrigens die Verhältnisse $r/d_i$ und $h/d_i$ nicht nur bei dem in der Figur 19 ersichtlichen Katalysator 441, sondern auch bei allen anderen anhand der Figuren 5 bis 18 beschriebenen Katalysatoren in den gleichen Bereichen liegen wie beim anhand den Figuren 1 bis 3 beschriebenen Katalysator 1. Entsprechendes gilt auch für die Abmessungen der Leitfläche und zum Teil noch für andere Abmessungen.

Die Katalysatoren und deren Verwendung können noch in anderer Hinsicht modifiziert werden. Man kann zum Beispiel Merkmale von verschiedenen der anhand der Figuren beschriebenen Katalysatoren miteinander kombinieren. Die Mäntel der Gehäuse und die Katalysator-Körper der Katalysatoren 1, 41, 61, 161, 201, 241, 301, 341, 361, 401, 441 können zum Beispiel gleich beim Katalysator 101 eine ovale oder elliptische Umrissform erhalten. Umgekehrt können die Mäntel der Gehäuse und die Katalysator-Körper der Katalysatoren 101, 141 mit kreisförmigem Umriss ausgebildet werden. Eventuell können die Mäntel der Gehäuse und die Katalysator-Körper sogar eine polygonale Umrissform haben.

Ferner kann man bei den Katalysatoren 101 und 141 die Mündung des Einlasses oder des Auslasses in einer der Figur 8 entsprechenden Ansicht beim Zentrum der einen Gehäuse-Endwand und des Katalysator-Körpers anordnen und/oder die innern Mantelflächen 107b bzw. 147b kreiszylindrisch und koaxial zur Achse des mit einer Endwand verbundenen und von dieser wegragenden Abschnitts des Einlasses oder Auslasses 103e bzw. 143e ausbilden. Der Einlass 143d des Katalysators 141 kann dann eventuell durch ein zusätzlich im Katalysator-Körper angebrachtes Loch hindurchdringen.

Der Katalysator 61 kann beispielsweise dahingehend geändert werden, dass die Innendurchmesser beider Katalysatorkörper gleich gross und/oder die Aussendurchmesser beider Katalysator-Körper verschieden gross gemacht werden.

Des weitern kann der gerade Einlass und/oder Auslass der Katalysatoren 1, 41 und anderer anhand von Figuren beschriebener Katalysatoren wie beim Katalysator 101 mit einem Bogen versehen werden. Umgekehrt kann man beim Einlass der Katalysatoren 101, 141, 161 den Bogen weglassen. Dies ist beispielsweise dann besonders vorteilhaft, wenn der Katalysator für den Einbau in ein Automobil vorgesehen ist, dessen Verbrennungsmotor einen rechtwinklig zur Fahrrichtung gerichteten Abgasausgang hat. Der Einlass des Katalysators kann dann über eine kurze, mindestens im wesentlichen gerade Verbindung mit dem Abgasausgang des Verbrennungsmotors und der Auslass des Katalysators über eine parallel zur Fahrrichtung mehr oder weniger gerade nach hinten verlaufende Leitung mit einem Schalldämpfer der Auspuffanlage verbunden werden.

Des weitern können die Randabschnitte der bei den Katalysatoren 1, 41, 61, 101, 161 vorhandenen Leitflächen und Gegenflächen ähnlich wie beim Katalysator 241 abgebogen sein. Entsprechendes gilt auch für die Leitflächen der in den Figuren 14 bis 19 gezeichneten Katalysatoren. Die Leitflächen bzw. Gegenflächen sind dann nur noch im wesentlichen und zum grössten Teil - d.h. mit Ausnahme der abgebogenen Randabschnitte - eben und rechtwinklig zu den Achsen der Einlässe.

Beim Katalysator 1 können eventuell die Funktionen des Einlasses und des Auslasses vertauscht werden, so dass das Abgas in der Figur 1 entgegengesetzt zu den Pfeilen durch den Katalysator strömt.

Bei den Leitelementen 349, 369 könnten noch den Löchern 315b des Leitelements 315 entsprechende Löcher vorgesehen werden. Das in der Figur 13 ersichtliche, im allgemeinen konische Leitelement 249 könnte ebenfalls mit analog zu den Löchern 315b des Leitelements 315 angeordneten Löchern und/oder mit einem zentralen Loch versehen werden, wobei dann im letzteren Fall analog wie bei den in den Figuren 16 und 17 gezeichneten Katalysatoren noch mindestens ein konisches Zusatz-Leitelement vorgesehen würde.

Ferner kann man die Einlässe und eventuell auch die Auslässe bei allen anhand der Figuren 1 bis 18 beschriebenen Katalysatoren mit einem konischen Innenflächenabschnitt versehen, der analog zum konischen Innenflächenabschnitt 443k des in der Figur 19 gezeichneten Katalysators ausgebildet ist.

Statt einen Katalysator-Körper gemäss der Figur 3 aus unmittelbar aneinander anliegenden, wellenförmigen Scheiben 9, 11 zu bilden, könnte man zwischen zwei solchen Scheiben jeweils eine ebene, perforierte Scheibe anordnen. Ferner können die Scheiben 9, 11 eventuell derart angeordnet werden, dass ihre Wellen einander nicht rechtwinklig, sondern unter einem anderen Winkel kreuzen, der aber vorzugsweise mindestens etwa 45° und beispielsweise mindestens 60° betragen sollte.

Des weitern könnte man für die Bildung eines in radialer Richtung gasdurchlässigen Katalysator-Körpers kreisringförmige Scheiben mit einem Kranz von radial verlaufenden Wellen versehen, die dann gegen aussen breiter werden. Zwischen zwei derartigen Scheiben kann dann jeweils eine ebene oder mit kreisförmigen Wellen versehene, kompakte oder eventuell perforierte, kreisringförmige Scheibe angeordnet werden.

Des weitern kann ein in radialer Richtung gasdurchlässiger Katalysator-Körper anstelle von Scheiben mit metallischen Trägern einen aus einem Keramikmaterial bestehenden Träger aufweisen, der mit radialen Durchgängen versehen ist.

Des weitern kann man eventuell einen ring- oder hülsenförmigen Katalysator-Körper vorsehen, dessen Durchgänge mit seiner Achse nicht einen rechten, sondern einen anderen Winkel bilden, der aber vorzugsweise mindestens etwa 45° und beispielsweise mindestens 60° betragen sollte. Die Durchgänge können dann im allgemeinen entlang von Konusflächen verlaufen. Eventuell können dann die innere Mantelfläche und die äussere Mantelfläche des ring- oder hülsenförmigen Katalysator-Körpers derart konisch sein, dass sie rechtwinklig zu den in sie mündenden Durchgängen sind und also mit einer zur Achse rechtwinkligen Radialebene einen Winkel bilden, der vorzugsweise mindestens 45° und beispielsweise mindestens 60° und nämlich gleich dem von den Durchgängen mit der Achse gebildeten Winkel ist.

**Patentansprüche**

1. Katalysator für die katalytische Behandlung von Abgas, insbesondere von Abgas eines Verbrennungsmotors, mit einem Gehäuse (3, 43, 63, 103, 143, 163, 203, 243, 303, 343, 363, 403, 443), das mit einem bei einer Mündung in den Gehäuse-Innenraum mündenden, eine Achse (5, 45, 65, 165, 205, 245, 305, 345, 445) aufweisenden Einlass (3d, 43d, 63d, 103d, 143d, 163d, 203d, 243d, 303d, 343d, 363d, 403d, 443d) sowie einem Auslass (3e, 43e, 63e, 103e, 143e, 163e, 203e, 243e, 403e) versehen ist, wobei im Gehäuse-Innenraum ein gasdurchlässiger Katalysator-Körper (7, 47, 67, 107, 147, 167, 207, 247, 307, 347, 367, 407, 447) und eine Leitfläche (15a, 49a, 75a, 115a, 143k, 163k, 215a, 249a, 315a, 349a, 369a, 415a, 449a) vorhanden sind, die von der Achse (5, 45, 65, 165, 205, 245, 305, 345, 445) weg über die Mündung hinausragt, zusammen mit einer ihr in Abstand gegenüberstehenden, bei der Mündung des Einlasses (3d, 43d, 63d, 103d, 143d, 163d, 203d, 243d, 303d, 343d, 363d, 403d, 443d) mit diesem verbundenen Gegenfläche (3i, 63i, 103i, 149a, 163i, 203i, 243i, 443i) einen Umlenk-Hohlraum (25, 85, 125, 155, 175, 225, 255, 325, 355) begrenzt und ausgebildet ist, um aus dem Einlass (3d, 43d, 63d, 103d, 143d, 163d, 203d, 243d, 303d, 343d, 363d, 403d, 443d) in den Gehäuse-Innenraum strömendes Abgas umzulenken und von der Achse (5, 45, 65, 165, 205, 245, 305, 345, 445) weg durch den Umlenk-Hohlraum (25, 85, 125, 155, 175, 225, 255, 325, 355) zu leiten, dadurch gekennzeichnet, dass die Leitfläche (15a, 49a, 75a, 115a, 143k, 163k, 215a, 249a, 315a, 349a, 369a, 415a, 449a) und die Gegenfläche (3i, 63i, 103i, 149a, 163i, 203i, 243i, 443i) einander gegenüberstehende, mit der Achse (5, 45, 65, 165, 205, 245, 305, 345, 445) mindestens 60° betragende Winkel bildende Abschnitte haben und dass der Einlass (3d, 43d, 63d, 103d, 143d, 163d, 203d, 243d, 303d, 343d, 363d, 403d, 443d) eine Innenfläche (3f, 103f, 443f) mit einem sich zum Rand der Mündung hin in einem durch die Achse (5, 45, 65, 165, 205, 245, 305, 345, 445) verlaufenden Schnitt bogenförmig erweiternden, stetig mit der Gegenfläche (3i, 63i, 103i, 149a 163i, 203i, 243i, 443i) verbundenen Übergangsflächenabschnitt (3h, 103h, 443h) aufweist, dessen Krümmungsradius r im genannten Schnitt mindestens 10% des Innendurchmessers $d_i$ des Einlasses (3d, 43d, 63d, 103d, 143d, 163d, 203d, 243d, 303d, 343d, 363d, 403d, 443d) beim engeren Ende des Übergangsflächenabschnitts (3h, 103h, 443h) beträgt.

2. Katalysator nach Anspruch 1, dadurch gekennzeichnet, dass der Krümmungsradius r mindestens 20% des Innendurchmessers $d_i$ beträgt.

3. Katalysator nach Anspruch 1 oder 2, dadurch gekennzeichnet, dass der Abstand h der Leitfläche (15a, 49a, 75a, 115a, 143k, 163k, 215a, 249a, 315a, 349a, 369a, 415a, 449a) vom Rand der Mündung mindestens 10% und höchstens 100% des Innendurchmessers $d_i$ beträgt.

4. Katalysator nach Anspruch 3, dadurch gekennzeichnet, dass der Abstand h mindestens 15% und höchstens 70% des Innendurchmessers $d_i$ beträgt.

5. Katalysator nach Anspruch 3 oder 4, dadurch gekennzeichnet, dass der Abstand h mindestens 15% und höchstens 25% des Innendurchmessers $d_i$ beträgt.

6. Katalysator nach einem der Ansprüche 1 bis 5, dadurch gekennzeichnet, dass die Leitfläche (15a, 49a, 75a, 115a, 143k, 163k, 215a, 249a, 315a, 349a, 369a, 415a, 449a) und die Gegenfläche (3i, 63i, 103i, 149a, 163i, 203i, 243i, 443i) derart ausgebildet sind, dass mindestens ein Teil und vorzugsweise mindestens der grösste Teil des dem Einlass (3d, 43d, 63d, 103d, 143d, 163d, 203d, 243d, 303d, 343d, 363d, 403d, 443d) zugeführten Abgases im Umlenk-Hohlraum (25, 85, 125, 155, 175, 225, 255, 325, 355) bis zu einem Randbereich von diesem geleitet wird, dessen Abstand von der genannten Achse (5, 45, 65, 165, 205, 245, 305, 345, 445) mindestens das 1,5-fache des Innendurchmessers $d_i$ beträgt.

7. Katalysator nach Anspruch 6, dadurch gekennzeichnet, dass der Abstand des genannten Randbereichs des Umlenk-Hohlraums von der genannten Achse (5, 45, 65, 165, 205, 245, 305, 345, 445) mindestens das 2,5-fache des Innendurchmessers $d_i$ beträgt.

8. Katalysator nach Anspruch 6 oder 7, dadurch gekennzeichnet, dass die Leitfläche (15a, 49a, 75a, 115a, 143k, 163k, 215a, 249a, 415a, 449a) und die Gegenfläche (3i, 63i, 103i, 149a, 163i, 203i, 243i, 443i) derart ausgebildet sind, dass das gesamte dem Einlass (3d, 43d, 63d, 103d, 143d, 163d, 203d, 243d, 403d, 443d) zugeführte Abgas im Umlenk-Hohlraum (25, 85, 125, 155, 175, 225, 255, 325, 355) bis zu dessen genanntem Randbereich strömt.

9. Katalysator nach einem der Ansprüche 1 bis 8, dadurch gekennzeichnet, dass die Leitfläche (15a, 49a, 75a, 115a, 143k, 163k, 215a, 249a, 415a, 449a) und die Gegenfläche (3i, 63i, 103i, 149a, 163i, 203i, 243i, 443i) einander gegenüberstehende Abschnitte aufweisen, die mit der Achse (5, 45, 65, 165, 205, 245, 305, 345, 445) mindestens 70° betragende Winkel bilden.

10. Katalysator nach einem der Ansprüche 1 bis 9, dadurch gekennzeichnet, dass die Leitfläche (15a, 49a, 75a, 115a, 143k, 163k, 215a, 315a, 349a, 369a, 415a, 449a) und die Gegenfläche (3i, 63i, 103i, 149a, 163i, 203i, 443i) im wesentlichen eben und rechtwinklig zur genannten Achse (5, 45, 65, 165, 205, 305, 345, 445) sind.

11. Katalysator nach einem der Ansprüche 1 bis 10, dadurch gekennzeichnet, dass das Gehäuse (3, 43, 103, 143, 443) einen Mantel (3a, 43a, 103a, 143a) und der Körper (7, 47, 107, 147, 447) eine äussere Mantelfläche (7a, 47a, 107a, 147a) aufweist, dass der Körper (7, 47, 107, 147, 447) eine innere, einen inneren Hohlraum (29, 129) umschliessende Mantelfläche (7b, 47b, 107b, 147b) sowie von der einen zur andern Mantelfläche führende Durchgänge (13) für das Abgas besitzt und dass zwischen dem Mantel (3a, 43a, 103a, 143a) des Gehäuses (3, 43, 103, 143, 443) und der äusseren Mantelfläche (7a, 47a 107a, 147a) des Körpers (7, 47, 107, 147, 447) ein äusserer Hohlraum (27, 127) vorhanden ist, der mit dem Umlenk-Hohlraum (25, 125, 155, 455) zusammenhängt.

12. Katalysator nach einem der Ansprüche 1 bis 10, dadurch gekennzeichnet, dass das Gehäuse (63) einen Mantel (63a) und zwei ringförmige Körper (67, 69) der genannten Art mit je einer äusseren Mantelfläche (67a, 69a), einer inneren Mantelfläche (67b, 69b) sowie mit von der einen zur andern Mantelfläche führenden Durchgängen für das Abgas aufweist, dass zwischen dem Mantel (63a) und den äusseren Mantelflächen (67a, 69a) der beiden Körper (67, 69) ein sich über diese erstreckender, äusserer Hohlraum (87) vorhanden ist, dass der Umlenk-Hohlraum (85) von der inneren Mantelfläche (67b) des einen, ersten Körpers (67) umschlossen und durch ein die Leitfläche (75a) bildendes Leitelement (75) von einem von der inneren Mantelfläche (69b) des zweiten Körpers (69) umschlossenen Hohlraum (89) getrennt ist und dass dieser mit dem Auslass (65e) verbunden ist.

13. Katalysator nach einem der Ansprüche 1 bis 10, dadurch gekennzeichnet, dass das Gehäuse (203, 243, 303, 343, 363, 403) einen Mantel (203a, 243a, 343a) und zwei Endwände (203b, 203c, 243b, 243c, 343b) aufweist, dass der Einlass (203d, 243d) bei der einen, ersten Endwand (203b, 243b, 343b) und der Auslass (203e, 243e) bei der andern, zweiten Endwand (203c, 243c) in den Gehäuse-Innenraum mündet, dass der Körper (207, 247, 307, 347, 367, 407) zylindrisch und/oder scheibenförmig und/oder ringförmig ist sowie zwei Stirnflächen besitzt, die durch Durchgänge für das Abgas miteinander verbunden sind und von denen die eine als Abgas-Eintrittsfläche (207a, 247a, 307a, 347a, 367a, 407a) und die andere als Abgas-Austrittsfläche (207b, 247b, 407b) dient, und dass die Leitfläche (215a, 249a) zwischen der ersten Endwand (203b, 243b) und der Abgas-Eintrittsfläche (207a, 247a) angeordnet oder mit dieser bündig ist.

14. Katalysator nach einem der Ansprüche 1 bis 13, dadurch gekennzeichnet, dass die Einlass-Innenfläche (3f, 103f, 443f) einen sich stetig an das engere Ende des Übergangsflächenabschnitts (3h, 103h, 443h) anschliessenden Innenflächenabschnitt (3g, 103g, 443k) hat, der zylindrisch ist oder sich zum Übergangsflächenabschnitt (443h) hin konisch erweitert und im letzteren Fall mit der Achse (445) einen höchstens 25° betragenden Winkel bildet.

15. Katalysator nach einem der Ansprüche 1 bis 14, dadurch gekennzeichnet, dass der Auslass (3e, 43e, 63e, 103e, 143e, 203e, 243e) bei einer Auslass-Mündung in den Gehäuse-Innenraum mündet und eine Innenfläche mit einem Übergangsflächenabschnitt aufweist, der sich zur Auslass-Mündung hin in einem durch die Auslass-Achse (5, 45, 205, 245) verlaufenden Schnitt bogenförmig erweitert.

16. Katalysator nach einem der Ansprüche 1 bis 12 oder 14 oder 15, dadurch gekennzeichnet, dass der Körper (7, 47, 67, 69, 107, 147, 167, 447) eine Anzahl im Querschnitt wellenförmiger Scheiben (9, 11) aufweist und dass die einander am nächsten benachbarten, wellenförmigen Scheiben (9, 11) einander in einer Draufsicht kreuzende Wellen haben.

## Claims

1. Catalytic converter for the catalytic treatment of exhaust gas, especially exhaust gas from a combustion engine, comprising a casing (3, 43, 63, 103, 143, 163, 203, 243, 303, 343, 363, 403, 443), which is provided with an inlet (3d, 43d, 63d, 103d, 143d, 163d, 203d, 243d, 303d, 343d, 363d, 403d, 443d), which opens at an opening into the casing interior space and has an axis (5, 45, 65, 165, 205, 245, 305, 345, 445), as well as an outlet (3e, 43e, 63e, 103e, 143e, 163e, 203e, 243e, 403e), wherein present in the casing interior space are a gas-permeable catalyst element (7, 47, 67, 107, 147, 167, 207, 247, 307, 367, 407, 447) and a guide surface (15a, 49a, 75a, 115a, 143k, 163k, 215a, 249a, 315a, 349a, 369a, 415a, 449a), which projects from the axis (5, 45, 65, 165, 205, 245, 305, 345, 445) out beyond the opening, and by which together with a counter-surface (3i, 63i, 103i, 149a, 163i, 203i, 243i, 443i) disposed opposite thereto at a spacing and connected with the inlet (3d, 43d, 63d, 103d, 143d, 163d, 203d, 243d, 303d, 343d, 363d, 403d, 443d) at the opening thereof a deflection cavity (25, 85, 125, 155, 175, 225, 255, 325 355) is bounded and formed in order to deflect exhaust gas, which is flowing out of the inlet (3d, 43d, 63d, 103d, 143d, 163d, 203d, 243d, 303d, 343d, 363d, 403d, 443d) and into the casing interior space, and guide it away from the axis (5, 45, 65, 165, 205, 245, 305, 345, 445) through the deflection cavity (25, 85, 125, 155, 175, 225, 255, 325, 355), characterised thereby that the guide surface (15a, 49a, 75a, 115a, 143k, 163k, 215a, 249a, 315a, 349a, 369a, 415a, 449a), and the counter-surface (3i, 63i, 103i, 149a, 163i, 203i, 243i, 443i) have portions disposed opposite one another and forming with the axis (5, 45, 65, 165, 205, 245, 305, 345, 445) an angle amounting to at least 60° and that the inlet (3d, 43d, 63d, 103d, 143d, 163d, 203d, 243d, 303d, 343d, 363d, 403d, 443d) has an inner surface (3f, 103f, 443f) with a transition surface portion (3h, 103h, 443h) which curvilinearly widens towards the rim of the opening in a section extending through the axis (5, 45, 65, 165, 205, 245, 305, 345, 445), is continuously connected with the counter-surface (3i, 63i, 103i, 149a, 163i, 203i, 243i, 443i) and the radius r of curvature of which in the said portion amounts to at least 10% of the inner diameter $d_i$ of the inlet (3d, 43d, 63d, 103d, 143d, 163d, 203d, 243d, 303d, 343d, 363d, 403d, 443d) at the narrower end of the transition surface portion (3h, 103h, 443h).

2. Catalytic converter according to claim 1, characterised thereby that the radius r of curvature amounts to at least 20% of the inner diameter $d_i$.

3. Catalytic converter according to claim 1 or 2, characterised thereby that the spacing h of the guide surface (15a, 49a, 75a, 115a, 143k, 163k, 215a, 249a, 315a, 349a, 369a, 415a, 449a) from the rim of the opening amounts to at least 10% and at most 100% of the inner diameter $d_i$.

4. Catalytic converter according to claim 3, characterised thereby that the spacing h amounts to at least 15% and at most 70% of the inner diameter $d_i$.

5. Catalytic converter according to claim 3 or 4, characterised thereby, that the spacing h amounts to at least 15% and at most 25% of the inner diameter $d_i$.

6. Catalytic converter according to one of claims 1 to 5, characterised thereby that the guide surface (15a, 49a, 75a, 115a, 143k, 163k, 215a, 249a, 315a, 349a, 369a, 415a, 449a) and the counter-surface (3i, 63i, 103i, 149a, 163i, 203i, 243i, 443i) are formed in such a manner that at least a part and preferably at least the largest part of the exhaust gas fed to the inlet (3d, 43d, 63d, 103d, 143d, 163d, 203d, 243d, 303d, 343d, 363d, 403d, 443d) is led into the deflection cavity (25, 85, 125, 155, 175, 225, 255, 325, 355) up to an edge region thereof, the spacing of which from the said axis (5, 45, 65, 165, 205, 245, 305, 345, 445) amounts to at least 1.5 times the inner diameter $d_i$.

7. Catalytic converter according to claim 6, characterised thereby that the spacing of the said edge region of the deflection cavity from the said axis (5, 45, 65, 165, 205, 245, 305, 345, 445) amounts to at least 2.5 times the inner diameter $d_i$.

8. Catalytic converter according to claim 6 or 7, characterised thereby that the guide surface (15a, 49a, 75a, 115a, 143k, 163k, 215a, 249a, 315a, 349a, 369a, 415a, 449a) and the counter-surface (3i, 63i, 103i, 149a, 163i, 203i, 243i, 443i) are formed in such a manner that the entire exhaust gas fed to the inlet (3d, 43d, 63d, 103d, 143d, 163d, 203d, 243d, 303d, 343d, 363d, 403d, 443d) flows in the deflection cavity (25, 85, 125, 155, 175, 225, 255, 325, 355) up to the said edge region thereof.

9. Catalytic converter according to one of claims 1 to 8, characterised thereby that the guide surface (15a, 49a, 75a, 115a, 143k, 163k, 215a, 249a, 315a, 349a, 369a, 415a, 449a) and the counter-surface (3i, 63i, 103i, 149a, 163i, 203i, 243i, 443i) have mutually opposite portions which form angles amounting to at least 70° with the axis (5, 45, 65, 165, 205, 245, 305, 345, 445).

10. Catalytic converter according to one of claims 1 to 9, characterised thereby that the guide surface (15a, 49a, 75a, 115a, 143k, 163k, 215a, 249a, 315a, 349a, 369a, 415a, 449a) and the counter-surface (3i, 63i, 103i, 149a, 163i, 203i, 243i, 443i) are substantially planar and at right angles to the said axis (5, 45, 65, 165, 205, 245, 305, 345, 445).

11. Catalytic converter according to one of claims 1 to 10, characterised thereby that the casing (3, 43, 103, 143, 443) has a shell (3a, 43a, 103a, 143a) and the element (7, 47, 107, 147, 447) has an outer shell surface (7a, 47a, 107a, 147a), that the element (7, 47, 107, 147, 447) possesses an inner shell surface (7b, 47b, 107b, 147b) enclosing an inner cavity (29, 129) as well as passages (13), leading from the one to the other shell surface, for the exhaust gas and that an outer cavity (27, 127), which communicates with the deflection cavity (25, 125, 155, 455), is present between the shell (3a, 43a, 103a, 143a) of the casing (3, 43, 103, 143, 443) and the outer shell surface (7a, 47a, 107a, 147a) of the element (7, 47, 107, 147, 447).

12. Catalytic converter according to one of claims 1 to 10, characterised thereby that the casing (63) has a shell (63a) and two annular elements (67, 69) of the said kind each with a respective outer shell surface (67a, 69a), an inner shell surface (67b, 69b) as well as passages, leading from the one to the other shell surface, for the exhaust gas, that an outer cavity (87) is present between and extends beyond the shell (63a) and the outer shell surfaces (67a, 69a) of the two elements (67, 69), that the deflection cavity (85) is enclosed by the inner shell surface (67b) of the one, first element (67) and is separated by a guide element (75), which forms the guide surface (75a), from a cavity (89) is enclosed by the inner shell surface (69b) of the second element (69), and that this cavity (89) is connected with the outlet (65e).

13. Catalytic converter according to one of claims 1 to 10, characterised thereby that the casing (203, 243, 303, 343, 363, 403) has a shell (203a, 243a, 343a) and two end walls (203b, 203c, 243b, 243c, 343b), that the inlet (203d, 243d) opens at the one first end wall (203b, 243b, 343b) and the outlet (203e, 243e) opens at the other, second end wall (203c, 243c), that the element (207, 247, 307, 347, 367, 407) is cylindrical and/or disc-shaped and/or annular as well as possesses two end faces which are connected together by passages for the exhaust gas and of which one serves as exhaust entry surface (207a, 247a, 307a, 347a, 367a, 407a) and the other as exhaust gas exit surface (207b, 247b, 407b), and that the guide surface (215a, 249a) is arranged between the first end wall (203b, 243b) and the exhaust gas exit surface (207a, 247a) or is connected with these.

14. Catalytic converter according to one of claims 1 to 13, characterised thereby that the inlet inner surface (3f, 103f, 443f) has an inner surface portion (3g, 103g, 443k), which is continuously connected to the narrower end of the transition surface portion (3h, 103h, 443h) and which is cylindrical or conically widens towards the transition surface portion (443h) and in the latter case forms with the axis (445) an angle amounting to at most 25°.

15. Catalytic converter according to one of the claims 1 to 14, characterised thereby that the outlet (3e, 43e, 63e, 103e, 143e, 203e, 243e) opens at an outlet opening into the casing interior space and has an inner surface with a transition surface portion, which curvilinearly widens towards the outlet opening in a section extending through the outlet axis (5, 45, 205, 245).

16. Catalytic converter according to one of the claims 1 to 12 or 14 or 15, characterised thereby that the body (7, 47, 67, 107, 147, 167, 443) has a plurality of discs (9, 11), which are wave-shaped in cross-section and that the wave-shaped discs (9, 11) closest adjacent one another have waves intersecting in plan view.

**Revendications**

1. Catalyseur pour le traitement catalytique de gaz d'échappement, en particulier les gaz d'échappement d'un moteur à combustion interne, comprenant un boîtier (3, 43, 63, 103, 143, 163, 203, 243, 303, 343, 363, 403, 443), lequel est doté d'une entrée (3d, 43d, 63d, 103d, 143d, 163d, 203d, 243d, 303d, 343d, 363d, 403d, 443d) qui débouche au niveau d'une embouchure dans la cavité intérieure du boîtier et qui présente un axe (5, 45, 65, 165, 205, 245, 305, 345, 445), ainsi que d'une sortie (3e, 43e, 63e, 103e, 143e, 163e, 203e, 243e, 403e), dans la cavité intérieure du boîtier étant prévu un corps de catalyseur (7, 47, 67, 107, 147, 167, 207, 247, 307, 347, 367, 407, 447) perméable aux gaz et une surface de guidage (15a, 49a, 75a, 115a, 143k, 163k, 215a, 249a, 315a, 349a, 369a, 415a, 449a), qui dépasse au-delà de l'embouchure en s'éloignant de l'axe (5, 45, 65, 165, 205, 245, 305, 345, 445), la surface de guidage délimitant une chambre creuse de déviation (25, 85, 125, 155, 175, 225, 255, 325, 355) conjointement avec une contre-surface (3i, 63i, 103i, 149a, 163i, 203i, 243i, 443i) qui lui fait face à distance vers l'embouchure de l'entrée (3d, 43d, 63d, 103d, 143d, 163d, 203d, 243d, 303d, 343d, 363d, 403d, 443d) en étant reliée à celle-ci, et la surface de guidage étant réalisée de manière à dévier les gaz d'échappement qui s'écoulent depuis l'entrée (3d, 43d, 63d, 103d, 143d, 163d, 203d, 243d, 303d, 343d, 363d, 403d, 443d) jusque dans la cavité intérieure du boîtier et à guider ces gaz en éloignement de l'axe (5, 45, 65, 165, 205, 245, 305, 345, 445) à travers la chambre creuse de déviation (25, 85, 125, 155, 175, 225, 255, 325, 355), caractérisé en ce que la surface de guidage (15a, 49a, 75a, 115a, 143k, 163k, 215a, 249a, 315a, 349a, 369a, 415a, 449a) et la contre-surface (3i, 63i, 103i, 149a, 163i, 203i, 243i, 443i) possèdent des tronçons à l'opposé l'un de l'autre, qui forment avec l'axe (5, 45, 65, 165, 205, 245, 305, 345, 445) un angle qui s'élève au moins à 60°, et en ce que l'entrée (3d, 43d, 63d, 103d, 143d, 163d, 203d, 243d, 303d, 343d, 363d, 403d, 443d) présente une surface intérieure (3f, 103f, 443f) avec un tronçon de surface de transition (3h, 103h, 443h) qui, en coupe à travers l'axe (5, 45, 65, 165, 205, 245, 305, 345, 445), va en s'élargissant en forme d'arc en direction de la bordure de l'embouchure et est constamment relié à la contre-surface (3i, 63i, 103i, 149a, 163i, 203i, 243i, 443i), le rayon de courbure r du tronçon de surface de transition s'élevant dans ladite coupe à au moins 10% du diamètre intérieur $d_i$ de l'entrée (3d, 43d, 63d, 103d, 143d, 163d, 203d, 243d, 303d, 343d, 363d, 403d, 443d) à l'extrémité étroite du tronçon de surface de transition (3h, 103h, 443h).

2. Catalyseur selon la revendication 1, caractérisé en ce que le rayon de courbure r s'élève à au moins 20% du diamètre intérieur $d_i$.

3. Catalyseur selon l'une ou l'autre des revendications 1 et 2, caractérisé en ce que la distance h entre la surface de guidage (15a, 49a, 75a, 115a, 143k, 163k, 215a, 249a, 315a, 349a, 369a, 415a, 449a) et la bordure de l'embouchure s'élève à au moins 10% et au plus 100% du diamètre intérieur $d_i$.

4. Catalyseur selon la revendication 3, caractérisé en ce que la distance h s'élève à au moins 15% et au plus 70% du diamètre intérieur $d_i$.

5. Catalyseur selon l'une ou l'autre des revendications 3 et 4, caractérisé en ce que la distance h s'élève à au moins 15% et au plus 25% du diamètre intérieur $d_i$.

6. Catalyseur selon l'une quelconque des revendications 1 à 5, caractérisé en ce que la surface de guidage (15a, 49a, 75a, 115a, 143k, 163k, 215a, 249a, 315a, 349a, 369a, 415a, 449a) et la contre-surface (3i, 63i, 103i, 149a, 163i, 203i, 243i, 443i) sont réalisées de telle façon qu'au moins une partie, et de préférence au moins la majeure partie des gaz d'échappement admis à l'entrée (3d, 43d, 63d, 103d, 143d, 163d, 203d, 243d, 303d, 343d, 363d, 403d, 443d) sont guidés dans la chambre creuse de déviation (25, 85, 125, 155, 175, 225, 255, 325, 355) jusqu'à une zone de bordure de celle-ci, dont la distance depuis l'axe précité (5, 45, 65, 165, 205, 245, 305, 345, 445) s'élève à au moins 1,5 fois le diamètre intérieur $d_i$.

7. Catalyseur selon la revendication 6, caractérisé en ce que la distance de la zone de bordure précitée de la chambre creuse de déviation par rapport à l'axe précité (5, 45, 65, 165, 205, 245, 305, 345, 445) s'élève à au moins 2,5 fois le diamètre intérieur $d_i$.

8. Catalyseur selon l'une ou l'autre des revendications 6 et 7, caractérisé en ce que la surface de guidage (15a, 49a, 75a, 115a, 143k, 163k, 215a, 249a, 315a, 349a, 369a, 415a, 449a) et la contre-surface (3i, 63i, 103i, 149a, 163i, 203i, 243i, 443i) sont réalisées de telle façon que la totalité des gaz d'échappement admis à l'entrée (3d, 43d, 63d, 103d, 143d, 163d, 203d, 243d, 303d, 343d, 363d, 403d, 443d) s'écoulent dans la chambre creuse de déviation (25, 85, 125, 155, 175, 225, 255, 325, 355) jusqu'à sa zone de bordure précitée.

9. Catalyseur selon l'une quelconque des revendications 1 à 8, caractérisé en ce que la surface de guidage (15a, 49a, 75a, 115a, 143k, 163k, 215a, 249a, 315a, 349a, 369a, 415a, 449a) et la contre-surface (3i, 63i, 103i, 149a, 163i, 203i, 243i, 443i) présentent des tronçons mutuellement opposés, qui forment avec l'axe (5, 45, 65, 165, 205, 245, 305, 345, 445) un angle s'élevant à au moins 70°.

10. Catalyseur selon l'une quelconque des revendications 1 à 9, caractérisé en ce que la surface de guidage (15a, 49a, 75a, 115a, 143k, 163k, 215a, 249a, 315a, 349a, 369a, 415a, 449a) et la contre-surface (3i, 63i, 103i, 149a, 163i, 203i, 243i, 443i) sont sensiblement planes et perpendiculaires à l'axe précité (5, 45, 65, 165, 205, 245, 305, 345, 445).

11. Catalyseur selon l'une quelconque des revendications 1 à 10, caractérisé en ce que le boîtier (3, 43, 63, 103, 143, 163, 203, 243, 303, 343, 363, 403, 443) comporte une enveloppe (3a, 43a, 103a, 143a) et en ce que le corps (7, 47, 107, 147, 447) comporte une surface enveloppe extérieure (7a, 47a, 107a, 147a) en ce que le corps (7, 47, 107, 147, 447) possède une surface enveloppe (7b, 47b, 107b, 147b) qui enferme une cavité intérieure (29, 129) ainsi que des passages (13) pour les gaz d'échappement, qui mènent jusqu'à l'autre surface enveloppe, et en ce qu'il est prévu entre l'enveloppe (3a, 43a, 103a, 143a) du boîtier (3, 43, 63, 103, 143, 163, 203, 243, 303, 343, 363, 403, 443) et la surface enveloppe extérieure (7a, 47a, 107a, 147a) du corps (7, 47, 107, 147, 447) une cavité extérieure (27, 127) qui est rattachée à la chambre creuse de déviation (25, 125, 155, 455).

12. Catalyseur selon l'une quelconque des revendications 1 à 10, caractérisé en ce que le boîtier (63) comporte une enveloppe (63a) et deux corps de forme annulaire (67, 69) du type précité, comportant chacun une surface enveloppe extérieure (67a, 69a), une surface enveloppe intérieure (67b, 69b), ainsi que des passages pour les gaz d'échappement, qui mènent jusqu'à l'autre surface enveloppe, en ce qu'il est prévu entre l'enveloppe (63a) et les surfaces enveloppes extérieures (67a, 69a) des deux corps (67, 69) une cavité extérieure (87) qui s'étend au-dessus de ceux-ci, en ce que la chambre creuse de déviation (85) est enfermée par la surface enveloppe intérieure (67b) d'un premier corps (67) et est séparée au moyen d'un élément de guidage (75) qui forme la surface de guidage (75a) d'une cavité (89) enfermée par la surface enveloppe intérieure (69b) du second corps (69), et en ce que cette dernière cavité est reliée à la sortie (65e).

13. Catalyseur selon l'une quelconque des revendications 1 à 10, caractérisé en ce que le boîtier (203, 243, 303, 343, 363, 403) comporte une enveloppe (203a, 243a, 343a) et deux parois terminales (203b, 203c, 243b, 243c, 343b), en ce que l'entrée (203d, 243d) débouche dans la cavité intérieure du boîtier au niveau d'une première paroi terminale (203b, 243b, 343b) et la sortie (203e, 243e) débouche au niveau de la seconde paroi terminale (203c, 243c), en ce que le corps (207, 247, 307, 347, 367, 407) est cylindrique et/ou en forme de disque et/ou en forme d'anneau et possède deux surfaces frontales qui sont reliées l'une à l'autre par des passages pour les gaz d'échappement, l'une servant de surface d'entrée pour les gaz d'échappement (207a, 247a, 307a, 347a, 367a, 407a) et l'autre servant de surface de sortie pour les gaz d'échappement (207b, 247b, 407b), et en ce que la surface de guidage (215a, 249a) est agencée entre la première paroi terminale (203b, 243b) et la surface d'entrée pour les gaz d'échappement (207a, 247a), ou bien est en affleurement avec cette dernière.

14. Catalyseur selon l'une quelconque des revendications 1 à 13, caractérisé en ce que la surface intérieure de l'entrée (3f, 103f, 443f) comporte un tronçon de surface intérieur (3g, 103g, 443k) qui se raccorde constamment à l'extrémité étroite du tronçon de surface de transition (3h, 103h, 443h), ce tronçon de surface intérieur étant cylindrique ou s'élargissant de manière conique en direction du tronçon de surface de transition (443h), et formant dans le dernier cas avec l'axe (445) un angle qui s'élève au plus à 25°.

15. Catalyseur selon l'une quelconque des revendications 1 à 14, caractérisé en ce que la sortie (3e, 43e, 63e, 103e, 143e, 203e, 243e) débouche au niveau d'une embouchure de sortie dans la cavité inférieure du boîtier et présente une surface intérieure avec un tronçon de surface de transition qui, en coupe à travers l'axe de la sortie (5, 45, 205, 245), va en s'élargissant en forme d'arc en direction de l'embouchure de sortie.

16. Catalyseur selon l'une quelconque des revendications 1 à 12, 14 et 15, caractérisé en ce que le corps (7, 47, 67, 69, 107, 147, 167, 447) comporte un certain nombre de disques (9, 11) de forme ondulée en section, et en ce que les disques de forme ondulée (9, 11) qui sont les plus proches l'un de l'autre possèdent des ondes qui se croisent mutuellement en vue de dessus.

# Fig.1

# Fig.2

# Fig.4

## Fig. 3

## Fig. 5

## Fig. 6

Fig.7

Fig.8

Fig.9

Fig.10

Fig.11

Fig.12

Fig.13

Fig.14

Fig.15

Fig.16

Fig.17

# Fig.18

# Fig.19